# EUROPEAN PATENT SPECIFICATION

(11) **EP 3 355 682 B1**
(45) Date of publication and mention of the grant of the patent: **29.01.2020**
(21) Application number: 16771009.4
(22) Date of filing: 06.09.2016
(51) Int. Cl.: A01F 15/08

(54) **METHOD AND APPARATUS FOR FORMING SEVERAL BALES AND DEPOSITING THEM ON THE GROUND AT SUITABLE LOCATIONS**
VERFAHREN UND VORRICHTUNG ZUR BILDUNG MEHRERER BALLEN UND ABLAGERUNG DIESER AUF DEM BODEN AN GEEIGNETEN ORTEN
PROCÉDÉ ET APPAREIL POUR FORMER PLUSIEURS BALLES ET LES DÉPOSER SUR LE SOL À DES EMPLACEMENTS APPROPRIÉS

(30) Priority: 29.09.2015 NL 2015525
(43) Date of publication of application: 08.08.2018
(73) Proprietor: Forage Company B.V., 3147 PB Maassluis (NL)
(72) Inventor: REIJERSEN VAN BUUREN, Willem Jacobus, 3147 PB Maassluis (NL)
(74) Representative: AGCO Intellectual Property Department
(86) International application number: PCT/NL2016/050620
(87) International publication number: WO 2017/058006

(56) References cited:
- EP-A1- 1 832 156
- EP-A1- 1 832 157
- EP-A1- 2 090 153
- EP-A1- 2 149 293
- WO-A1-2010/137968
- WO-A1-2013/157949
- US-A- 5 365 836
- US-B2- 7 401 547

## Description

### FIELD OF THE INVENTION

The invention refers to a method and an apparatus for forming a plurality of bales from loose agricultural crop material and for depositing them on the ground at suitable depositing locations, in particular round-cylindrical bales on sufficiently flat locations belonging to a hilly area.

### BACKGROUND OF THE INVENTION

A bale forming apparatus (baler) for agricultural purposes is moved over ground. The moved baler subsequently forms several bales and deposits the bales at different locations on the ground. Every depositing location must be suitable for depositing a bale there. In particular it must be avoided that a deposited bale rolls or glides downwards. Several proposals how to prevent this undesired event have been made.

US 7,401,547 B2 discloses a bale depositing system and method for depositing (setting down) several bales 5 on a field. A trajectory (bale set-down path 20) for a baler 2 is calculated in advance. The trajectory 20 depends on the position of a swath 4 on the field. For calculating the trajectory 20 in advance, several constraints (limiting values) are considered, amongst others required parameters of the bale and the topological structure of the field. The depositing locations for bales 5 are also automatically calculated in advance and the bales 5 are deposited on the calculated points. Several clusters with deposited bales are formed. The trajectory 20 and the depositing locations are calculated such that no deposited bale rolls downhill. The human operator (driver) or the system can trigger a bale 5 to be deposited earlier than scheduled.

EP 1832156 A1 discloses a round baler (Rundballenpresse 10) with a bale outlet device (Auslassvorrichtung 66), an actuator (Betatigungsvorrichtung 68) for the bale outlet device 66, and a control device (Steuereinrichtung 12). The control device 12 comprises an inclination sensor (Neigungssensor 26) and a display device (Anzeigevorrichtung 36). The inclination sensor 26 measures the current inclination of the baler 10. In order to avoid that a deposited bale rolls downwards one of the following steps are performed:
- The outlet device 66 is blocked until the baler 10 reaches a location in which the bale can safely be deposited.
- An alert is given to the operator together with advice how to steer the baler 10 to a suitable location.

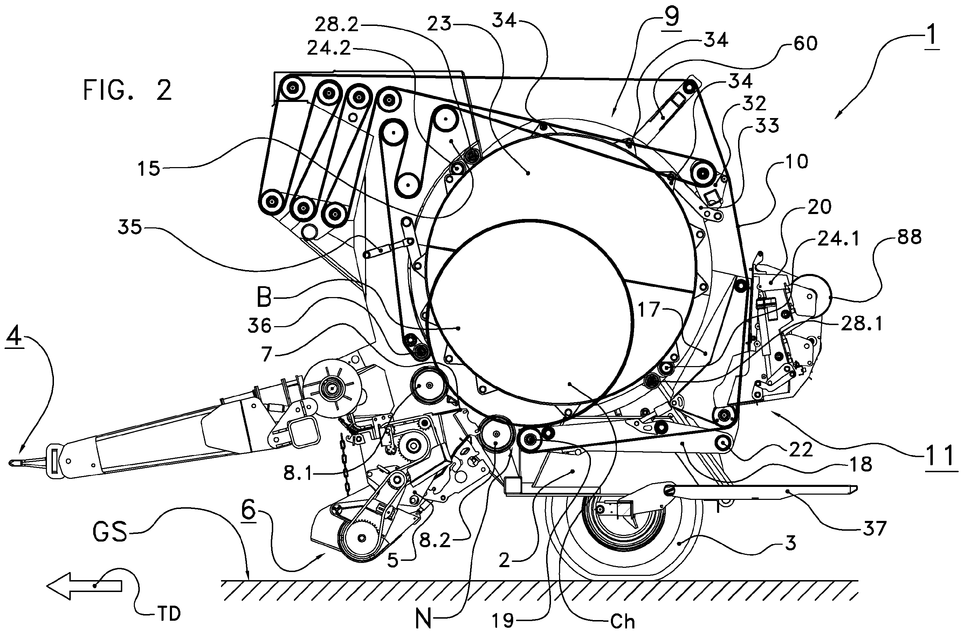

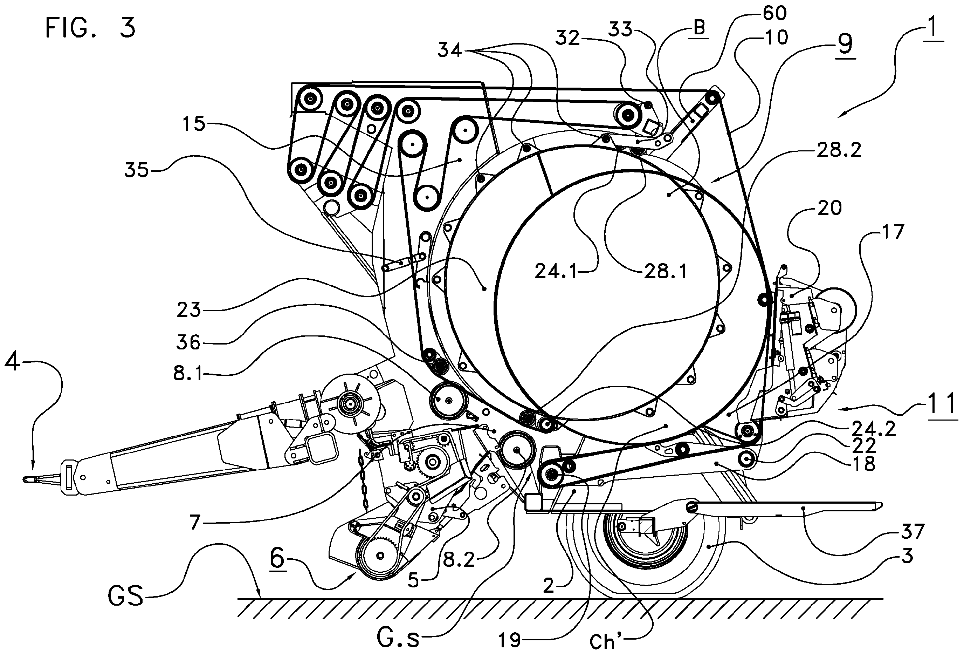

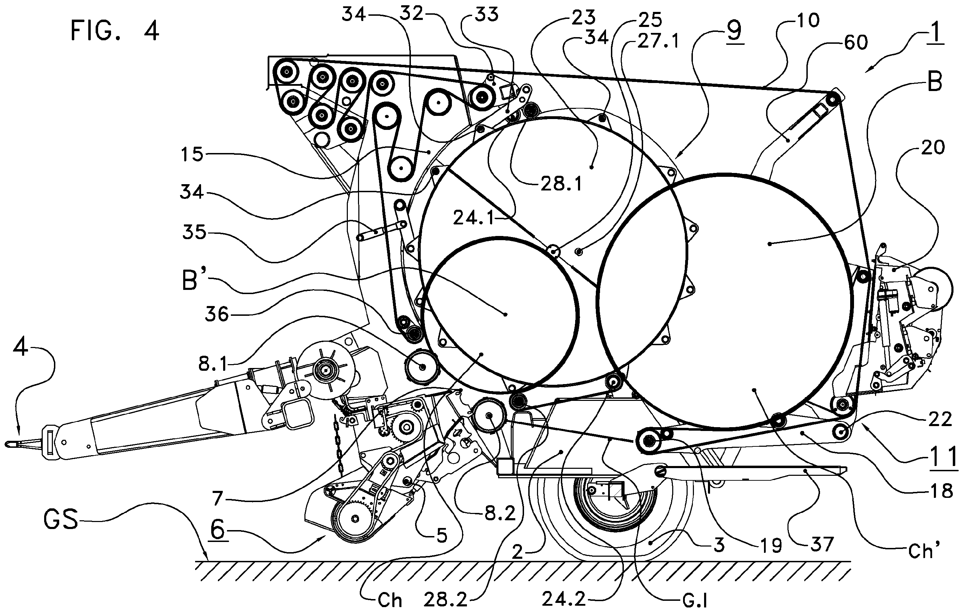

EP 1832157 A1 discloses a round baler (Rundballenpresse 10) with a depositing device 16. A round-cylindrical bale 14 is formed in a pressing chamber and is transferred onto an arcuate carrier 52 of the depositing device 16. The depositing device 16 deposits a bale 14 which is carried on the carrier 52 on the ground. The arcuate carrier 52 is pivotally mounted at the free end of a horizontal pivoting arm 50 (Horizontal-Schwenkarm 50), cf. Fig. 2 and Fig. 3. An inclination sensor (Neigungsssensor 26) transmits a signal about the inclination of the baler 10 to a control unit (Steuereinrichtung 12). The control unit 12 generates control inputs for actuators 38 to 42. The actuator 42 can pivot the arcuate carrier 52 around a horizontal axis 58. An actuator 40 can pivot the horizontal pivoting arm 50 with respect to the vertical center plane of the baler 10 around a vertical axis about 90°, cf. Fig. 4 to Fig. 6. The horizontal pivoting arm 50 can pivot with respect to a vertical pivot arm 48 around an axis 56. The actuators 38 to 42 are activated such that the round-cylindrical bale 14 is safely deposited on the ground. The center axis of the bale 14 is parallel to the hill gradient (Hangneigung) such that the bale cannot roll away.

US 2008/0177449 A1 discloses a system which controls the position of an agricultural implement while the implement is moved over ground. The system processes a field topology data base and measures the current geo-position of the implement. An expected geo-position is given. The implement is moved into the required position.

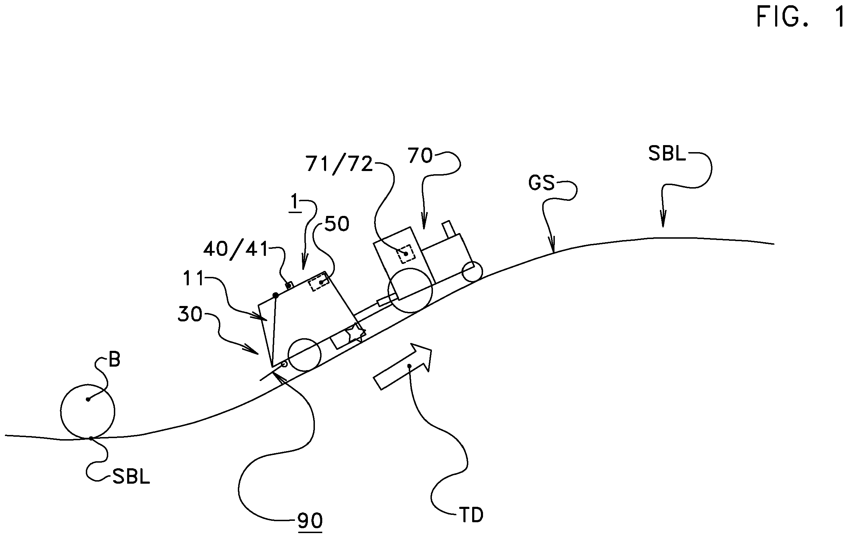

EP 2974594 A1 discloses an agricultural combination with a tractor 12, a baler 14, and a bale accumulator 16, cf. Fig. 1 and Fig. 2. The bale accumulator 16 has a main frame 58 supported on ground wheels 60, cf. Fig. 2. A discharge system in form of a bale cradle 64 is pivotally affixed to the accumulator frame 58. The cradle 64 receives from the baler 14 a bale B at a center position 68, cf. Fig. 2. An actuator 70 can transfer the receive bale B from the center position selectively to a left position 74 or a right position 72. The accumulator 16 can carry three bales simultaneously side-by-side on the cradle 64. An actuator 66 can raise the forward portion of the cradle 64 relative to the frame 58. For unloading the bale cradle 64, the actuator 66 lifts the forward portion and the or every bale rolls off the cradle 64 and away from the baler 14.

FR 2679732 B1 discloses an accumulation device (dispositif groupeur) for cylindrical bales 1. This device is mounted behind a bale press 2. Two arms (bras 5 et 6) carry ground-engaging wheels (roues 7 et 8). The rigid chassis with the arms 5, 6 carries two rigid vertical bars (montants verticales 9, 10). The bars 9, 10 carry vertical axes 11, 12 vertically above (à l'aplomb) the wheels 7, 8. Every axle 11, 12 carries a carrier having the shape of an inverted L (bras 13, 14). The vertical legs (jambes verticales) of the carriers 13, 14 carry a rocker (berceau 15, 16) with a cylindrical part. The radius (rayon) of this cylindrical part equals the radius of a bale 1 formed by the baler 2. The rocker 15, 16 forms a receptacle (panier de reception) and thereby a support for a bale 1. The receptacle 15, 16 is hingedly connected (articule) at the carrier 13, 14 by means of an axle 17, 18 which is rigidly mounted (solidaire) at the bottom of the carrier 13, 14 and which forms an interior support (appui inferieur) for the receptacle 15, 16. The receptacle 15, 16 can be pivoted around the axle 17, 18 by means of hydraulic cylinders (verins hydrauliques 21, 22). In addition every carrier 13, 14 can be rotated about the axles 11 and 12, e.g. by means of further hydraulic cylinders (not shown). In addition a carrier 13, 14 can be lifted and lowered, cf. the dotted and continuous lines in Fig. 2. It is possible to make a carrier 13, 14 being telescopic. The machine of FR 2679732 B1 has two rockers 15, 16 (les deux paniers).

### SUMMARY OF THE INVENTION

A problem solved by the invention is to provide a bale forming method with the features of the preamble of claim 1 and a bale forming apparatus with the features of the preamble of claim 15, wherein every bale is deposited at a suitable location and wherein the throughput through the bale forming apparatus is increased.

This problem is solved by a bale forming method with the features of claim 1 and by a bale forming apparatus with the features of claim 15. Preferred embodiments are specified in the depending claims.

The bale forming apparatus according to the invention is arranged as a vehicle and comprises
- a processing device,
- at least one bale carrier arranged for carrying at least one bale,
- a baler computer, and
- at least one ground property sensor.

The processing device provides a processing chamber. The bale forming apparatus further provides at least temporarily a further processing chamber. This further processing chamber is positioned vertically or angularly above the or one bale carrier and is separated from the processing chamber.
The method according to the invention comprises the following steps and the bale forming apparatus according to the invention is operated as follows:
- The bale forming apparatus is moved over ground.
- The bale forming apparatus receives loose material.
- Received loose material is injected into the processing chamber.
- The processing device processes injected loose material in the processing chamber.
- Processed loose material is moved from the processing chamber into the further processing chamber. Thereby this loose material is transferred in a position above the bale carrier.
- The moved loose material is further processed in the further processing chamber. Thereby a bale ready to be deposited on the ground is formed from the loose material in the further processing chamber and is carried by the bale carrier.
- The formed bale is ejected or otherwise moved out of the further processing chamber and is deposited on the ground.
- Thereby a plurality of bales is formed and deposited.

The method according to the invention comprises the following further steps which are performed at least one time per bale of the plurality and the bale forming apparatus is operated as follows while the formed bale is carried on board of the bale forming apparatus:
- The or one ground property sensor measures at least one value indicative of a ground property. The ground takes the measured value at the current location of the bale forming apparatus.
- Depending on the or at least one ground property value the baler computer automatically makes a decision whether or not the current location is suitable for depositing the formed bale at this location.
- The formed bale is only deposited at the current location if it is a suitable location. Every bale of the plurality is deposited at a suitable location. If necessary the bale forming apparatus carrying a formed bale is moved over ground until it reaches a suitable location.

### ADVANTAGES

In the following the term "formed bale" denotes a bale made on board of the bale forming apparatus from loose material wherein the bale has reached a state in which it can be deposited on the ground without falling apart. It is possible, however, that a formed bale is carried or further processed on board of the bale forming apparatus, e.g. the formed bale is moved to a suitable location or the entire surface of the bale is wrapped into plastic film or the formed bale is tilted or is marked.

According to the invention a ground property sensor measured if the current location is actually suitable. This feature increases the reliability. The baler operation does not depend only on the work and attention of a human operator and / or on a given trajectory.

According to the invention every bale of the plurality is deposited at a location which is suitable for depositing this bale at this location. The or at least one measured ground property value for this location is used for making a decision whether or not a bale being on board of the bale forming apparatus which is ready for being deposited is actually deposited at the current location of the bale forming apparatus. The bale is only deposited at the current location if this current location is actually suitable. This feature reduces the risk that the deposited bale causes damage to living beings or to further objects or is itself damaged. In particular it is avoided that the deposited bale rolls or glides downward due to a high inclination serving as the or one measured ground property value. If a further property of the ground surface is measured, the risk is reduced that the deposited bale is damaged by a rigid object on the ground or due to high ground moisture or is polluted, e.g.

According to the invention the formation of a bale is completed in the further processing chamber. The formed bale is moved from the further processing chamber onto the ground. The bale forming apparatus does not directly move a bale from the processing chamber onto the ground. The following advantage over a conventional baler without a bale carrier and without a further processing chamber is achieved: Such a conventional baler must form the bale and keep a formed bale in the same processing chamber. The baler cannot receive and process further loose material until the baler reaches a suitable location where the formed bale kept in the processing chamber can be deposited on the ground.

Thanks to the bale carrier the bale forming apparatus according to the invention can carry a formed bale to a suitable location and simultaneously receive and process further loose material in the processing chamber. This feature increases the throughput compared with a conventional baler without a bale carrier.

According to the invention the bale forming apparatus comprises a processing chamber and a further processing chamber separated from the processing chamber. The bale carrier supports from below the further processing chamber. Therefore a relative high amount of loose material can be contained in the further processing chamber. The feature with the further processing chamber increases the throughput through the bale forming apparatus. It is possible that loose material is processed in the further processing chamber and thereby a bale ready for being deposited is formed in the further processing chamber by processing this loose material. Simultaneously further loose material can be received and injected into the processing chamber. These steps of completing the bale formation and of processing further loose material in the processing chamber can be performed timely overlapping or even simultaneously.

This is an advantage over a conventional baler with only one processing chamber and optionally a bale carrier but without a further processing chamber: On board of a conventional baler the loose material must be processed in this processing chamber until a bale ready for being deposited is formed in the processing chamber. As long as the step is performed that the bale in the processing chamber is prevented from falling apart and is made ready for being deposited, no further loose material can be injected into this processing chamber. Therefore the conventional baler can receive substantially no further loose material until the formed bale is moved out of the processing chamber. A baler which comprises a bale carrier but not a further processing chamber does therefore not increase the throughput to that extent than the invention. The bale carrier can carry a formed bale but it cannot form a bale. Therefore the bale in the processing chamber must be made ready for being deposited on the ground and before being moved onto the bale carrier. Otherwise the bale would fall apart on the bale carrier.

The invention avoids this limitation. The further processing chamber surrounds the bale until the bale formation is completed. Thanks to the further processing chamber a bale forming apparatus according to the invention can operate continuously, in particular without interrupting the movement over ground while the bale formation in the further processing chamber is completed. Therefore the invention increases the throughput through the bale forming apparatus.

In particular thanks to the further processing chamber the invention provides more options how to act and how to operate the bale forming apparatus under the constraint that the bale forming apparatus operates in an area and every bale should be deposited on a suitable location within this area but not every location within this area is suitable for depositing a bale there. A conventional baler with one processing chamber completes the formation of a bale in the processing chamber and cannot process loose material in the processing chamber until the baler reaches a suitable locating where the bale is moved out of the processing chamber and is deposited on the ground. A baler with one processing chamber and a bale carrier makes it possible to carry a formed bale on the bale carrier to a suitable location. But the bale needs to be formed in the only processing chamber before being moved onto the bale carrier.

The processing device can process loose material in the processing chamber while the bale carrier carries a completed bale. Thanks to the bale carrier one controllable operating parameter is achieved, namely the time point at which a formed bale is moved away from the bale carrier and is deposited on the ground such that the bale carrier can take a further bale. Thanks to the further processing chamber a further controllable operating parameter is achieved, namely the time point at which loose material on board of the bale forming apparatus is moved from the processing chamber into the further processing chamber. This time point can be selected substantially regardless of the ground contour and ground properties, in particular also when the bale forming apparatus is currently at a location which is not suitable for depositing a bale there. The time which is needed for moving the loose material into and for completing the bale formation in the further processing chamber by using the injected loose material can be used for moving the bale forming apparatus to a suitable location.

The bale forming apparatus according to the invention can be operated according to a given trajectory which is calculated in advance depending on the ground contour and optionally on further parameters, e.g. the amount of crop material on the ground. But the invention provides a higher flexibility compared with conventional balers such that a given trajectory is not required. In addition no automatic steering device and no steering advice for a human operator is required. Nevertheless every bale is deposited at a suitable location. Not relying on a given trajectory is an advantage in particular as the actual values of the ground property may differ from parameters used for calculating the trajectory in advance and as the actual trajectory along which the bale forming apparatus moves may differ from the scheduled trajectory.

A baler with a further processing chamber offers the following advantage over a baler with a bale carrier which can deposit a formed bale with a selected angle and orientation with respect to the travelling direction of the baler: This bale carrier must be pivotal around a vertical pivoting axis and/or around a horizontal axis parallel to the travelling direction. The baler according to the invention does not require actuators for pivoting the bale carrier around such a vertical or horizontal pivoting axis. The baler according to the invention provides more flexibility in particular in a hilly environment. In such a hilly environment it may not be possible to change the orientation of the formed bale about a sufficient amount for securely depositing the bale. The possible movement of the bale carrier with respect to the baler around the vertical pivoting axis is necessarily restricted. The bale forming apparatus according to the invention can just be moved forward until it reaches a suitable location.

A baler according to the invention can comprise a geo-position sensor which detects the current geo-position of the bale forming apparatus. But the invention enables to implement ground property sensor such that the bale forming apparatus does not comprise a geo-position sensor.

### PREFERED EMBODIMENTS

In one embodiment the bale forming apparatus comprises a pick-up unit which is well-known from the prior art. The pick-up unit picks up loose material from the ground. Thereby the bale forming apparatus receives the picked-up loose material. Thanks to the processing chamber and the further processing chamber the bale forming apparatus can also pick up loose material while a bale is formed in the further processing chamber. No loose material remains on the ground. The bale forming apparatus can also receive loose material from a further harvester, e.g. a combine harvester or a field chopper. Thanks to the processing chamber and the further processing chamber the operation of the further harvester needs not to be interrupted.

In one embodiment the bale forming apparatus conveys received loose material through a feeding channel into the processing chamber. The bale forming apparatus can convey the loose material through the feeding channel by means of a conveyor rotor or a conveyor belt. The loose material can be picked up by a pick-up unit or can be ejected by a further harvester and be deposited on a conveyor belt of the baler, e.g. Thanks to the two processing chambers it is not necessary to store loose material in the feeding channel. The risk of a jam or overload in the feeding channel is reduced. The event that no loose material can be injected into the processing chamber due to a blocked feeding channel does not occur at all or at least less often.

In one embodiment the processing chamber is drum-shaped. Preferably the step of processing loose material in the drum-shaped processing chamber comprises the step that loose material is rotated within the processing chamber and simultaneously further loose material is injected into it. The loose material is thereby compressed in the processing chamber.

In a further embodiment the processing chamber is implemented as a channel. It is possible that the channel has an arcuate shape. This channel may taper, i.e. its cross section area decreases seen in a direction towards the processing chamber. The cross section area may also remain constant over the entire length of the channel. In one implementation the injected loose material is compressed in the channel. In a further implementation the loose material is just buffered in the channel. The channel may be delimited from below and/or from above by at least one conveyor belt. It is possible that several stuffing tines engage into the channel and rotate and thereby compress loose material in the processing chamber. In every implementation the processing chamber can receive loose material and can contain received loose material while the bale formation is completed in the further processing chamber.

Preferably an outlet guides from the processing chamber into the further processing chamber. A door or rake or further outlet closing device can selectively close or open this outlet. When the outlet closing device is closed, injected loose material remains in the processing chamber. The formation of a bale in the further processing chamber can be finished. When the outlet closing device is opened, loose material is moved from the processing chamber into the further processing chamber.

In one embodiment the further processing chamber is drum-shaped. Every formed bale has a round-cylindrical shape, i.e. the bale has two parallel circular front faces and a round circumferential surface between the front faces. Preferably at least one endless pressing belt and/or a sequence of pressing rollers surround the further processing chamber. Such a bale forming apparatus can be denoted as a round baler.

In a further embodiment the further processing chamber has the shape of a straight channel with an inlet and an outlet. The bale forming apparatus forms cuboid bales in this channel, e.g. by means of an oscillating piston. The bale forming apparatus wraps every cuboid bale in the channel, e.g. by placing several strands of twine around it and tying the strands. Such a bale forming apparatus can be denoted as a square or cuboid baler.

In one embodiment a casing surrounds the further processing chamber. This casing can carry processing devices for the further processing chamber, protects a human operator from touching a moving processing device or further moving part of the bale forming apparatus, and protects the further processing chamber from environmental impacts. A discharge gate belongs to the casing and can be moved between at least one closed position and an opened position. In the opened position an aperture for ejecting a formed bale out of the further processing chamber is provided. In one implementation the bale carrier below the further processing chamber forms a part of the discharge gate and is moved away from the further processing chamber when the discharge gate is moved into the opened position. As the bale carrier is moved when the discharge gate is opened, the bale carrier does not form an obstacle when moving the formed bale out of the further processing chamber.

According to the invention the received loose material is processed in the processing chamber. In one embodiment the loose material is just stored in the processing chamber as long as no loose material can be transferred into the further processing chamber. In a further embodiment the loose material is pressed together in the processing chamber. Pressing the loose material together can be performed by at least one endless pressing belt or by a stuffing device, e.g.

In one implementation an outlet guides from the processing chamber into the further processing chamber. As long as this outlet is closed, the received loose material remains in the processing chamber and is processed, e.g. stored or pressed. When the outlet is opened, the loose material is transferred or otherwise moved into the further processing chamber. This embodiment of the invention provides a further controllable operating parameter, namely the time point when this outlet is opened.

According to the invention the received loose material is processed in the processing chamber and is transferred into the further processing chamber. The bale is formed in the further processing chamber. In a preferred embodiment the step of further processing the loose material in the further processing chamber comprises the following step: The circumferential surface - or the entire surface - of the bale is wrapped in the further processing chamber into a net, a plastic film, or several strands of twine. The further processing chamber surrounds and prevents the bale from falling apart at least until the bale surface is entirely wrapped. After moving the bale out of the further processing chamber, the wrap around the circumferential or entire surface prevents the bale from falling apart. Further embodiments are possible how to prevent the bale from falling apart after being deposited on the ground, e.g. by adding a preservative or glue or adding a gluing substance to the bale.

It is possible that additional measures are performed in the further processing chamber. In one embodiment pressure is applied onto the transferred loose material in the further processing chamber before and/or while wrapping the bale, e.g. by at least one endless flexible pressing belt or by an oscillating pressing piston or by reducing the size of the further processing chamber. In one implementation at least one sidewall of the further processing chamber is pivotal. An actuator moves the pivotal sidewall against an opposing sidewall of the further processing chamber such that the chamber size is reduced.

In one embodiment the further processing chamber is mainly used for performing the measure which prevents the deposited bale from falling apart, e.g. for wrapping at least the circumferential surface of the bale. The bale is formed, i.e. made ready for being deposited, in the further processing chamber from a set of loose material which is moved in one step from the processing chamber into the further processing chamber. While being formed in the further processing chamber, the bale does not significantly change its weight. It is possible but not necessary that the transferred loose material is further compressed in the further processing chamber. In this embodiment the further processing chamber is preferably only used for completing the bale formation, in particular for wrapping the circumferential surface.

Preferably a value indicative of the amount of loose material contained in the processing chamber is measured at least one time. In the case that at least one dimension, e.g. the diameter, of the processing chamber is variable the variable dimension of the processing chamber is measured and used as the amount value. In the case of a processing chamber with fixed size the pressure applied by the processed and compressed loose material onto a wall of the processing chamber or the weight of the loose material in the processing chamber can be measured. As soon as the measured amount value reaches a given threshold, the loose material in the processing chamber is moved into the further processing chamber. This threshold can be given in advance, e.g. according to a user requirement, or can be calculated or derived during operation, preferably depending on the decisions about locations being suitable.

According to the invention the bale forming apparatus completes the formation of a bale in the further processing chamber. Timely overlapping or even simultaneously the bale forming apparatus receives further loose material and injects and processes it in the processing chamber. In the method according to the invention the step of injecting loose material into the processing chamber is interrupted if a value indicative of the amount of loose material in the processing chamber reaches a given threshold and as long as no loose material can be moved from the processing chamber into the further processing chamber. No loose material can in particular be moved as the formation of a bale in the further processing chamber is not finished or as a formed bale cannot be deposited because the current location is not suitable.

This amount threshold may be given in advance or may automatically be calculated during operation depending on the amount of loose material in the further processing chamber. It may be that the entire amount of loose material in both processing chambers or on board of the bale forming apparatus must not exceed a given entire amount threshold. The amount in the processing chamber must not exceed the given entire amount threshold reduced by the amount currently being in the further processing chamber.

Preferably further loose material is injected again into the processing chamber if the formed bale is removed out of the further processing chamber, e.g. deposited on the ground or moved onto a further bale carrier.

In one embodiment at least one endless flexible pressing belt surrounds the major part of the processing chamber as well as the major part of the further processing chamber. The or every pressing belt is permanently moved in a conveying direction. For transferring loose material from the processing chamber into the further processing chamber, at least a sequence of the pressing belt which surrounds the processing chamber is moved perpendicular or angularly to the conveying direction in a position above the bale carrier. This movement transfers loose material onto the bale carrier. This segment now surrounds the further processing chamber.

In a further embodiment the processing chamber mainly serves as a buffering chamber. Loose material is moved from the processing chamber into the further processing chamber over a time period and remains there such that the amount of loose material and therefore the size and/or weight of the bale in the further processing chamber significantly increase before the bale formation is completed and the formed bale is moved out of the further processing chamber. The processing chamber serving as the buffering chamber stores received loose material as long as the further processing chamber cannot receive loose material because the measure for preventing the bale in the further processing chamber from falling apart is performed, e.g. the bale surface is wrapped in the further processing chamber.

Preferably the step that a formed bale is moved out of the further processing chamber triggers the step that loose material in the processing chamber serving as the buffering chamber is moved into the further processing chamber - regardless of the amount of loose material in the processing chamber. As loose material is transferred out of the processing chamber, the space being available in the processing chamber is increased.

In one embodiment the inclination of the ground serves as one ground property. The inclination is a pivoting angle of the ground with respect to an ideal horizontal plane, i.e. a plane perpendicular to a line pointing to the center of the earth. This pivoting angle is measured with respect to an inclination axis.

Preferably the direction of this inclination axis depends on the orientation which a deposited bale has with respect to the travelling direction of the bale forming apparatus. The bale extends around a bale center axis. In one application the bale forming apparatus deposits the bale such that the bale center axis is perpendicular to the travelling direction. In a further application the bale center axis is parallel or angular to the travelling direction. Preferably the ground property sensor measures the inclination as the pivoting angle about an inclination axis parallel to the bale center axis. This inclination axis is in one implementation perpendicular or parallel to the traveling direction. The deposited bale can roll or glide downwards in a direction perpendicular to the bale center axis. The higher the inclination is the higher is the force urging onto the bale.

In one embodiment one ground property sensor measures the baler inclination. The location is suitable if the inclination is within a given range. In one embodiment the or a further ground property sensor measures a further ground property, e.g. the soil moisture, the chemical property of the ground, the color of the ground or the existence of a rigid object on the ground. The location is suitable if the inclination is within the given range and the value of the further ground property also fulfills a given condition.

In one embodiment the moisture of the soil at a location serves as the or one further ground property. In the case of a high soil moisture the deposited bale may become wet and/or dirty or polluted. This risk occurs in particular if the bale is wrapped into a net or twine strands and not into plastic. Due to the ground moisture the bale might no longer suites as fodder for an animal. Preferably a location is only suitable if the soil moisture is below a given threshold.

It is also possible that at least one ground property refers to the presence of non-presence of a harmful chemical substance in the soil. Several ground properties may refer to different substances. The bale may be polluted if a harmful chemical substance is present in the soil or on the ground surface at the depositing location. Therefore a location is only suitable if no harmful substance is present at this location.

In one implementation the or one ground property sensor comprises a geo-position sensor and has access to one electronic map showing the presence or concentration of the or at least one potential harmful chemical substance at different locations within an area. It is also possible that a sensor for the chemical substance is mounted on board of the bale forming apparatus.

The wrap around the bale surface should not be damaged by a rigid object on the ground. In particular an impermeable sheet around the entire bale surface should not be cut by a stone or rock or metallic object on the ground. Therefore the existence of a rigid object on the ground is one ground property. In one implementation a camera mounted on board of the bale forming apparatus takes images from the ground. An image evaluating unit automatically evaluated the images and searches for rigid objects in the acquired images. It is also possible that a sensor on board of the bale forming apparatus can detect a metallic object on the ground.

In one implementation the color of the ground surface at a location serves as the or one ground property. A specific color may indicate the soil moisture or presence of rigid objects of the presence of chemical substances. A sensor mounted on board of the bale forming apparatus measures the color of the ground property. This sensor may operate in the visible or infrared or ultraviolet light spectrum.

In one embodiment the bales of the plurality are deposited in an area which is surrounded or otherwise limited by a border. It may be that at least one segment within this area is not suitable for depositing a bale there, e.g. a segment around a tree or a rock, and the border around this segment belongs to the area border. Preferably every deposited bale should have a minimal distance to the area border. Therefore the distance of a location to the area border is one ground property. This distance is preferably measured by measuring the current geo-position of the bale forming apparatus and using an electronic map of the area showing the area borders. It is also possible to take images from the area and evaluate them.

In one embodiment a minimal distance between two different depositing locations should be maintained. Therefore the distance to the last depositing location is one ground property.

In one embodiment the step of depositing a formed bale on the ground is automatically inhibited if the baler computer has automatically decided that the current location of the bale forming apparatus is not suitable for depositing a bale there. In one embodiment a pivotal discharge gate of a casing surrounding the further processing chamber remains closed, preferably locked, at least until the bale forming apparatus reaches a suitable location. Thereby or by a further suitable measure the step of bale depositing is inhibited.

In a further embodiment the baler computer generates an alert in a form in which a human can notice the alert. The alert is generated if the current location is not suitable. The generated alert is given to a human operator for the baler, e.g. an operator who steers a tractor or further propelled vehicle pulling the baler. The alert can comprise a visual and/or acoustic alarm. It is up to the operator to deposit the bale at the current location or to move the bale to a suitable location. In one implementation the form of the alert depends on the measured ground property value. It is possible that a suitable location is indicated by a green lamp or further signaling element, a non-suitable location by a red signaling element and a risky location by a yellow signaling element.

In one implementation the alert is only generated if a bale on board of the bale forming apparatus is ready to be deposited. In a further implementation a message whether or not the current location is suitable is always generated and given to the operator.

In one embodiment a trajectory is generated in advance. This trajectory comprises several suitable bale depositing locations. The bale forming apparatus is moved over ground according to this generated trajectory. The trajectory can be generated such that every bale deposited according to this trajectory fulfills a given bale property, e.g. has a desired diameter or length or weight. Thanks to the further processing chamber more options for generating the trajectory are provided.

In one embodiment the or one ground property sensor comprises a geo-position sensor which measures the current geo-position and therefore the current location of the bale forming apparatus. The bale forming apparatus operates in an area. The ground property sensor has access to an electronic ground property map for this area. The map can be stored on board of the bale forming apparatus or on a mobile data storing device or at a remote location, e.g. at a central server. This map assigns to every location - or at least to several locations - in the area the respective ground property value at this location. This ground property map is created before the bale forming apparatus starts its operation.

In one embodiment the ground property sensor further comprises at least one sensing device which does not require the current geo-position for measuring the ground property value at the current location. In the case of the inclination serving as the or one ground property this sensing device can comprise a pendulum and preferably an angle sensor measuring the angle between the pendulum's longitudinal axis and the travelling direction or an axis perpendicular to the ground. In the case of further ground properties the sensing device can comprise a camera and an image evaluating unit. The image evaluating unit can detect rigid objects in the images. One sensing device can also be implemented as a contact sensor or color sensor or ground moisture sensor.

In particular the embodiment with the geo-position sensor and the electronic ground property map enables the ground property sensor to measure the ground property at a location within the area which is different from the current location of the bale forming apparatus and may be reached by the bale forming apparatus in the future. Thanks to this embodiment it is possible to detect a location within the area which is - according to the property map - suitable for depositing a bale there.

The embodiment with measuring the ground property value at the different location enables several applications and implementations for further improving the baler's performance.

In one application the bale forming apparatus is moved to the or one location which is - according to the property map - detected as being suitable for depositing a bale there before the bale apparatus reaches this location. It is possible that corresponding instructions are given to an operator who steers the bale forming apparatus or a propelled vehicle pulling the bale forming apparatus. It is also possible that the bale forming apparatus or the pulling vehicle is automatically steered and moved to the suitable location. In one implementation a trajectory starting in the current location and comprising the suitable location is generated, preferably while the bale forming apparatus is moved over ground, and used for guiding and/or steering the bale forming apparatus.

It may be that the actual inclination or further ground property value differs from the inclination according to the property map or that the geo-position of the bale forming apparatus is not absolutely correctly measured. In one implementation the value of the or one ground property is measured again or for the first time when the bale forming apparatus has reached the location which is - according to the property map - a suitable location. The ground property value is measured by a further measuring method. In the case of the inclination serving as the or one ground property the inclination is preferably measured again by using a pendulum or a further inclination measuring method which does not require using a geo-position sensor. By using the other method, e.g. the pendulum, it is automatically checked whether the location is actually a suitable location.

Preferably a given trajectory is updated if it detected that the actual trajectory or an actual depositing location differs from a scheduled trajectory or location. Preferably a geo-position sensor is mounted on board of the bale forming apparatus and can detect a trajectory difference. The ground property sensor can detect that a location which is according to the trajectory suitable is actually not suitable. For updating the trajectory at least one ground property value occurring at a location different from the current location is used.

In one implementation the value of a further ground property value is measured when the bale forming apparatus has reached the location, e.g. the value of a ground property which cannot be measured by using the property map. One example may be the test whether a rigid object is on the ground at this location.

Often every formed and deposited bale should have a given value for a bale property, e.g. a given diameter or length or weight. This given value may be the same for every bale of the plurality or may differ from bale to bale of the property. It is desired that every deposited bale has the respective given bale property value. It is further desired that the bale forming apparatus can continuously, i.e. without any interruption, receive loose material. But the constraint that every bale should be deposited at a suitable location must be fulfilled. In some situations the storing capacity of the bale forming apparatus does not enable a continuous operation and simultaneously the desired result that every bale has the required property value when being deposited at a suitable location.

One embodiment to cope with this task is that an expected completion area is calculated in advance, i.e. while the bale forming apparatus is moved over ground and before the bale forming apparatus reaches the completion area. The or one bale formed on board of the bale forming apparatus will have the required property value when the bale forming apparatus reaches or is within this completion area.

One implementation for calculating the completion area is the following one: While the bale is formed on board of the bale forming apparatus, the respective current bale property value is measured several times, i.e. at different time points. This measurement may refer to the loose material in the processing chamber and/or in the further processing chamber or generally on board of the bale forming apparatus.

According to one implementation for calculating the expected completion area these bale property values are used as follows: By using the time series with the bale property values a prediction is made at what location the or one bale on board of the bale forming apparatus will have the given bale property value, e.g. the required diameter or length or weight. The current geo-position of the bale forming apparatus and preferably a scheduled or expected trajectory of the bale forming apparatus are used for calculating this expected completion area. It is possible that a further map with the respective amount of available loose material at different locations within the operating area is further used for calculating the expected completion area.

The baler will or can be moved into the completion area. At least one expected future location of the baler is therefore within this completion area. The ground property sensor measures the or one ground property value occurring at this expected future location. This ground property value is available before the bale forming apparatus reaches the completion area and therefore this expected future location. It is possible that the expected future location is not suitable for depositing a bale there. It is even possible that no location within the completion area is suitable. The invention offers several options how to react in advance to this situation, i.e. before the bale forming apparatus actually reaches this expected location.

One option is to keep the formed bale on board of the bale forming apparatus until the bale forming apparatus reaches a suitable location. This suitable location can be outside of the completion area. The formed bale is kept in the further processing chamber or on an optional further bale carrier positioned outside of both processing chambers. While the bale forming apparatus carrying the formed bale is moved over ground, it can receive and process further loose material in the processing chamber until the amount of loose material reaches a given amount threshold.

A further option is to deposit the bale at a suitable location outside of the completion area wherein the bale forming apparatus reaches this suitable location before the bale has the given bale property value, e.g. has a smaller size or weight. It is ensured that the bale forming apparatus can receive and process further loose material without any interruption. This further option is preferably performed in that way that the bale formation in the further processing chamber is completed although the bale property value is not yet reached.

Yet a further option considers the following constraint in advance: The entire amount of loose material which the bale forming apparatus can carry is limited. Therefore the amount of loose material which is currently on board of the bale forming apparatus is measured, e.g. by using several load cells on board of the bale forming apparatus.

In one embodiment an amount threshold is given. The actual amount of loose material on board of the bale forming apparatus must not exceed this amount threshold. In one implementation the bale forming apparatus carrying the formed bale is moved over ground and receives and processes further loose material. As soon as the measured amount of loose material on board of the bale forming apparatus reaches the given amount threshold, the bale forming apparatus interrupts the step of receiving loose material such that the actual amount does not increase anymore until a bale is deposited. The already received loose material can be processed. The bale forming apparatus is moved towards a suitable location. The bale forming apparatus deposits the bale there. This implementation ensures that the bale is deposited at a suitable location. But the bale forming apparatus temporarily cannot receive loose material. It may happen that loose material remains on the ground. In addition this result decreases the throughput. The following embodiment avoids this disadvantage.

According to this embodiment it is automatically decided whether the bale forming apparatus with the formed bale will reach a suitable location before or at least when the amount of loose material on board of the bale forming apparatus reaches the given amount threshold.

One implementation for doing so is that an expected amount area is calculated. The bale forming apparatus will reach this amount area or will be within this amount area when the amount on board of the bale forming apparatus reaches this amount threshold. The amount area is calculated under the presumption that the bale forming apparatus does not deposit a bale before reaching the amount area - e.g. as no location is suitable or as the or one bale property does not reach a given property value, e.g. a given diameter. The ground property sensor measures in advance if at least one location within this amount area is suitable for depositing a bale there.

In one implementation a sequence of measured amount values is used. This sequence is evaluated and the amount area is derived. In one implementation an electronic amount map for the area in which the baler operates is given. This map assigns to several locations within the area the respective amount of loose material on the ground which is to be received, e.g. is picked up by the baler. These two implementations can be combined for calculating the amount area.

If no location within the completion area and/or the amount area is suitable for depositing a bale there, a decision between the following options is made - either automatically or by a human operator:
- When the amount of loose material reaches the given amount threshold, the bale forming apparatus is moved over ground without receiving further loose material until the baler reaches a suitable location. The continuous baler operation is interrupted.
- The bale formation in the further processing chamber is started and the formed bale is deposited as soon as possible at a suitable location - even if the bale property has not the required value when the bale is deposited, e.g. the deposited bale has a smaller size or weight than desired.

In one embodiment the selection for the second option triggers the step that loose material is moved from the processing chamber into the further processing chamber and the bale formation is started, e.g. the circumferential surface is wrapped in the further processing chamber. In a further embodiment that loose material which is currently in the further processing chamber is used for forming the bale.

The further processing chamber makes it possible to select the second option and to operate accordingly and simultaneously receive further material and process it in the processing chamber. The baler operates without interruption. The throughput is not reduced.

In one embodiment the formed bale is ejected out of the further processing chamber and is directly deposited on the ground. It is possible that the ejected bale rolls or glides over a pivotal ramp on the ground. The ramp decelerates the bale movement.

In a further embodiment the bale forming apparatus comprises a further bale carrier which is positioned outside of both processing chambers. The formed bale is moved out of the further processing chamber and is moved onto the further bale carrier. The further bale carrier can be used for at least one of the following tasks:
- The further bale carrier carries the formed and ejected bale. Simultaneously the bale forming apparatus is moved over ground and receives and processes further loose material and forms a further bale in the further processing chamber until it reaches a suitable location. The bale on the further bale carrier is deposited there.
- The entire surface of the bale is wrapped, preferably into plastic sheet, while the bale is carried on the further bale carrier. Preferably the further bale carrier comprises a wrapping table which rotates the carried bale. Plastic film is pulled from at least one supply roll which is kept by a stationary holder or is rotated around the bale rotated on the wrapping table.
- The orientation of the formed and ejected bale with respect to the travelling direction of the bale forming apparatus is changed. Preferably the further bale carrier changes the bale orientation depending on the hill gradient, i.e. the direction of the steepest ascension of the ground. In one implementation the further bale carrier orients and thereby positions the bale such that the bale center axis is parallel to the hill gradient.

In one embodiment the further bale carrier tilts a round-cylindrical bale onto a front face. In one implementation the further processing chamber is drum-shaped and every bale of the plurality has a round-cylindrical shape. The center axis of the bale extends perpendicular to the travelling direction. The further bale carrier tilts the bale selectively to the left or to the right seen in the travelling direction such that the bale is deposited on a front face and is tilted in an upward direction.

In one embodiment several bales are deposited in a cluster on the ground, i.e. every bale of the cluster is deposited substantially at the same location. This embodiment makes it easier to later collect the deposited bales and transport them away from the area in which they have been formed.

In one implementation two bales are subsequently formed and deposited substantially at the same location. Thanks to the further processing chamber only few time is required for completing the formation of the second bale after the first bale is ejected. In a further implementation a further bale carrier is used. In order to deposit several bales in a cluster on the ground the further bale carrier carries at least one bale to the location for the cluster.

In one implementation the further bale carrier can carry several bales. The bales for the cluster are collected on the further bale carrier until the bale forming apparatus reaches the suitable location for the cluster. In a further implementation at least one bale of the cluster is carried by and deposited from the further bale carrier onto the ground at the cluster location. A further bale is carried in the further processing chamber to the cluster location and is moved out of the further processing chamber on the ground. Thanks to the further processing chamber the further bale carrier needs not to carry every bale for the cluster.

The bale forming apparatus according to the invention can be a self-propelled vehicle. The bale forming apparatus can also be arranged for being pulled or otherwise moved by a propelled vehicle, e.g. a tractor or combine harvester or field chopper.

The baler computer which makes the decisions can be mounted on board of the bale forming apparatus. The baler computer can further serve as a baler control unit which receives signals from baler sensors and generates control inputs for baler actuators. The baler computer on board of the bale forming apparatus can also be in data connection with such a baler control unit. It is also possible that the baler computer is positioned in a remote position outside of the bale forming apparatus, e.g. on a mobile device, and is in a wireless or wired data connection with a control unit on board of the bale forming apparatus.

The or every ground property sensor can be mounted on board of the bale forming apparatus itself. It is also possible that the or one ground property sensor is mounted on board of the propelled vehicle which pulls or pushes the bale forming apparatus. The baler computer is in data connection with this sensor on board of the propelled vehicle. This embodiment makes it possible to use an already existing sensor on board of the propelled vehicle, e.g. a swath sensor comprising a camera mounted at the front edge of the pulling vehicle.

According to the invention a ground property sensor on board of the bale forming apparatus or of a further vehicle measures at least one time the value of the or one ground property at the current location. In one embodiment one ground property sensor is mounted on board of the baler and a further ground property sensor is mounted on board of the propelled vehicle which pulls or pushes the bale forming apparatus or on board of the harvester which ejects loose material to be received and processed by the bale forming apparatus. The baler computer makes the decision whether or not a location is suitable depending on at least two ground property values, preferably for the same ground property: one ground property value measured on board of the bale forming apparatus and one ground property value measured on board of the propelled vehicle. On the one hand this embodiment provides redundancy. On the other hand this embodiment enables to automatically derive whether the ground contour around the current location of the baler has the form of a plane or is curved or arcuate. In addition it is possible to predict the ground property value at a location which the bale forming apparatus will reach within a short time, in particular if the further vehicle pulls the bale forming apparatus and is therefore in front of the bale forming apparatus.

Preferably the data connection between the baler computer and the ground property sensor mounted on board of the propelled vehicle is implemented according to the ISObus Standard (ISO 11783) or a further suitable data transmission standard.

### BRIEF DESCRIPTION OF THE DRAWINGS

Fig. 1 shows in a side view schematically a combination of a pulling tractor and a round baler operating on a hilly ground;
Fig. 2 shows a continuous bale forming apparatus according to a preferred embodiment with the tailgate in the bale forming position;
Fig. 3 shows the bale forming apparatus of Fig. 2 with the tailgate in the first bale wrapping position;
Fig. 4 shows the bale forming apparatus of Fig. 3 with the tailgate in the second bale wrapping position and with a larger distance to the front housing and with a new bale;
Fig. 5 shows the bale forming apparatus of Fig. 2 with the tailgate in the bale ejecting position;
Fig. 6 shows a baler-wrapper combination according to a further embodiment of the invention;
Fig. 7 shows a further bale carrier in the form of a tilting unit;
Fig. 8 shows a control scheme of an embodiment of a bale forming apparatus according to the invention;
Fig. 9 shows an inclination map and a planned trajectory in accordance with an embodiment of the invention.

### DETAILED DESCRIPTION OF EMBODIMENT

In all embodiments described below the invention is used in a bale forming apparatus (baler). Such a baler is pulled over ground in a travelling direction TD, picks up loose crop material (hay, straw, silage, e.g.) from the ground, conveys the picked-up crop material through a feeding channel towards a pressing chamber or channel, optionally cuts the conveyed crop material in the feeding channel, injects the cut crop material into the pressing chamber, and forms round-cylindrical or cuboid bales in the drum-shaped pressing chamber or rectangular pressing channel from the injected crop material.

Fig. 1 shows schematically in a side view an agricultural combination comprising
- a bale forming apparatus (round baler) 1 configured to form round-cylindrical bales B from loose crop material such as hay or straw or silage and
- a pulling tractor 70 configured to pull the round baler 1 in a travelling direction TD over an agricultural field having a ground surface GS.

On the ground surface GS several swaths with crop material are formed in advance by mowing and raking. These swaths have to be picked up and to be pressed into several bales. The formed bales are deposited on the ground GS and are later transported away. The baler 1 is configured to pick up from the ground this crop material contained in the swaths and to compress the picked-up crop material into several round-cylindrical bales B. These bales constitute the plurality of bales to be formed and deposited on the ground GS.

The baler 1 comprises a rotated pick-up unit arranged to pick up crop material from the ground surface GS. According to a first embodiment the baler 1 comprises a bale forming chamber serving as the processing chamber and a bale wrapping chamber serving as the further processing chamber (to be explained below) to form a bale B from the crop material. The picked-up loose material is injected into and compressed in the bale forming chamber for creating a round-cylindrical bale B. The created bale B is moved into the wrapping chamber. Without being wrapped the bale would fall apart after being deposited on the ground. Once the bale B is formed, it may be ejected from the baler 1 by using a bale ejection device 30 at the rear side of the baler 1. This bale ejection device 30 may open a pivotal discharge gate 11 and/or comprise a so-called bale accumulator 90 which can carry at least one bale ready to be deposited.

The circumferential surface of the bale B is wrapped in the bale wrapping chamber. In the embodiment the term "forming a bale" comprises the steps of pressing crop material to a bale and of wrapping the circumferential surface of this bale into wrapping material. The term "formed bale" therefore denotes a wrapped bale ready for being deposited on the ground.

The baler 1 is arranged for being used to form and deposit bales in a hilly area. In such hilly area not every location of the ground surface GS is suitable to deposit a bale B. When a round-cylindrical bale B is ejected at a slope having a too large inclination, the bale B may roll downwards in a direction perpendicular to the bale center axis. This event can be caused by the force of gravity and the slope. This event is dangerous and may lead to injury of persons or other living beings and/or may seriously damage objects. In the embodiment the inclination serves as one ground property to be measured and to be considered in the depositing decisions. In addition the wrap of the deposited bale should not be damaged and the deposited bale should not be polluted by the soil, in particular not by a rigid object on the ground.

The baler 1 comprises a geo-position sensor 40, for example a GPS sensor, and an inclination sensor 41. The position sensor 40 is configured to determine the current geoposition of the baler 1 on the ground surface GS. The inclination sensor 41 is configured to measure a ground inclination at the current position of the baler 1. In one embodiment the inclination sensor 41 may additionally predict a future inclination, i.e. an inclination at a location which the baler 1 may reach in the future. The inclination sensor 41 measures or predicts the inclination around one axis or around two or even more axes, e.g. around a horizontal axis parallel to the travelling direction TD and a horizontal axis perpendicular to the travelling direction TD.

The baler 1 comprises a data-processing controller 50 which belongs to a baler computer and automatically processes signals from the position sensor 40, from the inclination sensor 41, and from further sensors on board of the baler 1 and/or on board of the pulling tractor 70. Depending on some of these signals the controller 50 determines for every formed bale B a suitable bale depositing location SBL. In one embodiment the controller 50 provides an activation signal when a bale B is ready to be deposited and the bale forming apparatus 1 is located on the suitable bale depositing location SBL. The bale ejection device 30 automatically deposits the bale there. In a further embodiment the controller 50 generates an output for an operator and/or processes a user input for depositing a bale now.

A suitable bale depositing location SBL is typically a relatively flat location where a bale B cannot roll downwards after being deposited, or, in some cases, a location where the bale B can roll downwards over a certain distance in an area where this rolling down of the bale B does not result in any risk on dangerous situations. In Figure 1 two suitable bale depositing locations SBL are indicated. A round-cylindrical bale B must not be deposited, however, on a location positioned between these two suitable bale depositing locations SBL. A flat location is only a suitable location if the bale wrap is not damaged and the bale is not polluted.

When the baler 1 reaches such a suitable bale depositing location SBL and carries a bale B ready for being deposited, the controller 50 may provide an activation signal to eject the bale from the baler 1. The activation signal may be a signal to the operator indicating that it is safe to eject a bale from the baler 1, i.e. the baler 1 carries a bale B ready to be deposited and the baler 1 is located at a suitable bale depositing location SBL. In an alternative embodiment the activation signal may be sent directly to the bale ejection device 30 such that the formed bale is automatically ejected and deposited on the ground GS without any user command.

In one embodiment the invention is used on board of a continuous round baler 1 as disclosed in WO 2013/157950 A1 and WO 2013/157949 A1, e.g. In one implementation this baler 1 comprises one broad pressing belt (mono-belt baler). A first segment of the pressing belt surrounds a bale forming chamber serving as the processing chamber. A second segment of the same pressing belt surrounds a bale wrapping chamber which is positioned behind the bale-forming chamber and which serves as the further processing chamber. In a further implementation several parallel pressing belts surround the bale forming chamber as well as the bale wrapping chamber.

The or every pressing belt and thereby both chambers are surrounded by a casing comprising a stationary front housing serving as a further casing part and a pivotal tailgate 11 serving as a moveable discharge gate. In the embodiment the tailgate (discharge gate) 11 can be pivoted with respect to the stationary front housing into four different positions:
- a bale forming position,
- two different bale wrapping positions, and
- a bale ejecting position.

A hydraulic actuator can move the tailgate 11 between these positions.

The tailgate 11 being in the bale forming position and the front housing together entirely cover the or every pressing belt and thereby both chambers. Only a small nip between the tailgate 11 being in the bale forming position and the front housing occurs.

The bottom of the tailgate 11 being in the bale wrapping position carries a bale. A gap being broader than the nip occurs between the front housing and the tailgate being in the bale wrapping position. A segment of the bale surface is visible through this gap. The tailgate is rigidly but releasable connected with the front housing when the tailgate is in the bale forming position or is in the or one bale wrapping position. The tailgate remains in the or one bale wrapping position while the bale on the tailgate is wrapped and until the wrapped bale is to be ejected and deposited on the ground.

In one implementation the hydraulic actuator keeps the tailgate in the current position and moves the tailgate into a further position. In a further implementation the connection between tailgate and front housing is released when a bale in the bale wrapping chamber is readily wrapped and is ready for being deposited at the current location and the tailgate is to be moved in the bale ejecting position.

An aperture between the front housing and the tailgate being in the bale ejecting position occurs. This aperture suffices for ejecting a formed bale out of the round baler. When being ejected, the center axis of the round-cylindrical bale is perpendicular to the travelling direction TD of the baler 1 and parallel to the ground GS.

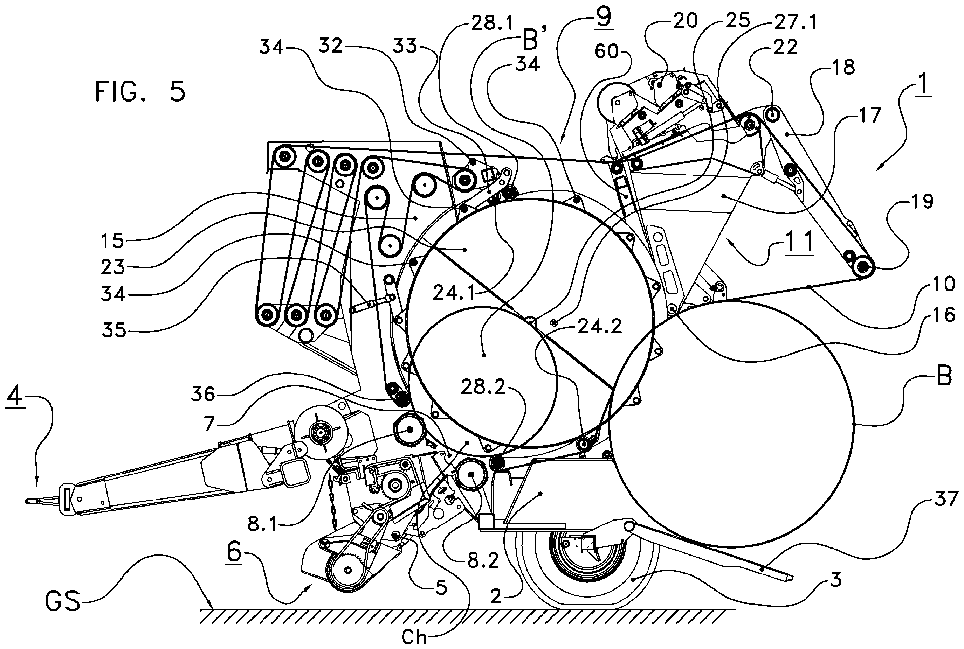

Fig. 2 to Fig. 5 show a continuous bale forming apparatus of the first embodiment with the tailgate being in the bale forming position (Fig. 2), in the first and second bale wrapping positions (Fig. 3, Fig. 4), and in the bale ejecting position (Fig. 5). The bale forming apparatus 1 comprises the following parts:
- a towing unit 4 for connecting the baler 1 with the pulling tractor 70,
- a chassis 2,
- two ground-engaging wheels 3 which are rotatably mounted at the chassis 2,
- a pick-up unit 6 with a driven pick-up drum carrying several spring-mounted pick-up tines (not shown),
- a feeding channel 5 guiding from the pick-up unit 6 to a channel outlet 7 serving as a crop material inlet guiding into the bale forming chamber Ch,
- two driven starter rollers 8.1, 8.2 which delimit from two opposing sides the crop material inlet 7,
- a bale forming device 9 comprising the starter rollers 8.1, 8.2 and the or every tensioned elastic endless pressing belt 10,
- the bale forming chamber Ch and the bale wrapping chamber Ch' provided by the bale forming device 9,
- a stationary front housing 15 which serves as the further casing part,
- a pivotal tailgate 11 which serves as the moveable discharge gate and comprises a tailgate frame 17 and a pivotal tailgate bottom 18,
- a tailgate bottom roller 19 mounted at the free end of the tailgate bottom 18,
- a wrapping device 20 with an unrolling station for carrying a supply reel 88 with wrapping material,
- two supporting discs 23 which can rotate around a common pivoting axis 25 (shown in Fig. 4, perpendicular to the drawing planes of Fig. 2 to Fig. 5),
- two pushing rollers 24.1, 24.2 mounted between the supporting discs 23 and near the circumferential surface of the supporting discs 23,
- a hydraulic actuator 35 for the discs 23,
- a coupling device 32 with a disc-engaging hook 33 and several coupling pins 34.1, 34.2, ...
- two pivotal guiding rollers 28.1, 28.2 for the or every pressing belt 10 which are connected with the supporting discs (23) by means of two guiding arms,
- a pivotal tensioning device for the or every pressing belt 10 carrying several further deflecting rollers and pivotally being mounted at the front housing 15,
- a lever arm 60 carrying a further guiding roller and rigidly being mounted at the tailgate frame 17, and
- a pivotal ramp 37.

The tailgate frame 17 of the tailgate 11 is pivotal with respect to the front housing 15. The tailgate bottom 18 is pivotal with respect to the tailgate frame 17 around a horizontal pivoting axis 22 (perpendicular to the drawing planes of Fig. 2 to Fig. 5). The tailgate bottom 18 is positioned below the bale wrapping chamber Ch' and belongs to the bale carrier of the embodiment.

The or every pressing belt 10 is guided around the deflecting roller 19 at the tailgate bottom 18, around the guiding roller mounted on the lever arm 60, around one of the pivotal guiding rollers 28.1, 28.2, and around several further deflecting rollers, among them the moveable deflecting rollers of the tensioning device. Every guiding roller 28.1, 28.2 is mounted between the free ends of two guiding roller arms. One guiding roller 28.1 or 28.2 delimits the belt segment around the bale forming chamber Ch from the belt segment around the bale wrapping chamber Ch'. Every guiding arm is pivotally mounted at one supporting disc 23. The bale forming chamber Ch and the bale wrapping chamber Ch' extend between the supporting discs 23.

The wrapping device 20 is rigidly mounted at the tailgate frame 17. A pivotal cover (not shown) covers the unrolling station which rotatably holds the supply reel 88 with wrapping material, preferably a net. The cover can be opened for replacing the supply reel 88.

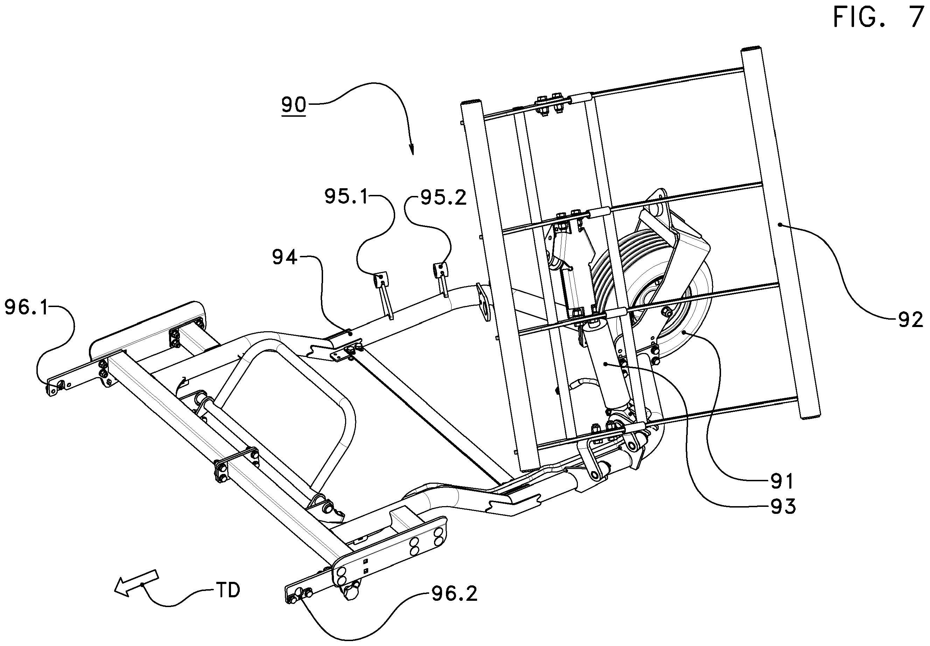

The baler 1 according to the embodiment operates as follows:
- The baler 1 is pulled in the travelling direction TD over the ground surface GS.
- The pick-up drum of the pick-up unit 6 is rotated and picks up loose crop material from the ground GS. Thereby the baler 1 receives loose crop material.
- The picked-up loose crop material is conveyed through the feeding channel 5 and the crop material inlet 7 into the drum-shaped bale forming chamber Ch which is delimited by the starter rollers 8.1, 8.2 and by a segment of the or every pressing belt 10. The supporting discs 23 belong to the opposing sidewalls of this bale forming chamber Ch. This bale forming chamber Ch serves as the processing chamber and can radially expand.
- An increasing round-cylindrical bale B is formed under pressure in the bale forming chamber Ch. Thereby the injected loose material is processed in the bale forming chamber Ch. Simultaneously further loose material is picked up and is injected into the bale forming chamber Ch such that the bale B increases in the bale forming chamber Ch.
- The diameter and/or weight of the increasing bale B in the bale-forming chamber Ch is measured, preferably with a given sample time. The bale diameter can be measured by measuring the pivoting angle of the tensioning device. The weight can be measured by using a load cell at the towing unit 4 and two further load cells at the two axles for the ground-engaging wheels 3.
- After the round-cylindrical bale B has reached the required diameter or length and/or required weight, a web of wrapping material taken from the supply reel 88 is pressed against the outer surface of the or at least one moved pressing belt 10. The or one moved pressing belt 10 conveys the pressed web towards a nip N. This nip N occurs between the stationary front housing 15 and the pivotal tailgate 11 still being in the bale forming position. In the embodiment this nip N occurs between the deflecting roller 19 at the tailgate bottom 18 on the one side and the lower starting roller 8.2 on the other side, cf. Fig. 4.
- The conveyed wrap is injected from below through the nip N into the bale forming chamber Ch. The inserted web is clamped between the rotated bale B and the or every pressing belt 10 and is pulled from the supply reel 88 and is placed on the circumferential surface of the rotated bale B in the bale wrapping chamber Ch'.
- A hydraulic actuator moves the tailgate 11 into the first and later into the second bale wrapping position after the injected web is clamped and conveyed over a given distance. Now the small gap G.s and later the large gap G.I between the front housing 15 and the tailgate 11 occurs, cf. Fig. 3 and Fig. 4.
- Simultaneously the disc actuator 35 jointly rotates both supporting discs 23 around 180 degrees. For doing so the hydraulic actuator 35 is temporarily coupled with the discs 23 by means of the coupling device 32 and expands.
- The rotation of the supporting discs 23 causes one of the pushing rollers 24.1 or 24.2 to push the formed bale B backwards, i.e. away from the pick-up unit 6, onto the tailgate bottom 18. By this step loose material is transferred from the bale forming chamber Ch into the bale wrapping chamber Ch'. For enabling the bale B to be pushed and subsequently being wrapped, the tailgate bottom 18 belonging to a bale carrier is lowered and is slightly moved away from the front housing 15 and is no longer in the bale forming position but is in one bale wrapping position.
- The bale B pushed onto and resting on the tailgate bottom 18 is now in the bale wrapping chamber Ch' which is surrounded by a further segment of the or every pressing belt 10, cf. Fig. 3 and Fig. 4. This bale wrapping chamber Ch' serves as the further processing chamber and is positioned above the bale carrier with the tailgate bottom 18. The or every pressing belt 10 rotates the bale B resting on the tailgate bottom 18 and pulls the web from the supply reel 88.
- Simultaneously further crop material is picked up and is injected into the bale forming chamber Ch. Thereby a new bale B' is formed, cf. Fig. 4. Thanks to the second wrapping position with extended gap G.I more space is provided for the bale forming chamber Ch to extend. Thanks to the bale forming chamber Ch and the bale wrapping chamber Ch' the step of picking up crop material can be continued while the circumferential surface of the bale B is wrapped in the wrapping chamber Ch'. The baler 1 can further be moved over ground GS.
- After the circumferential surface of the bale B on the tailgate bottom 18 is wrapped into the required number of wrapping material layers, the web is severed and the hydraulic actuator opens the tailgate 11 by pivoting it into the bale ejecting position. The step of opening the tailgate 11 can automatically be triggered by the control unit 50 or manually by the operator. Thanks to the tensioning force of the or every pressing belt 10 the wrapped bale B is ejected out of the bale wrapping chamber Ch', cf. Fig. 5.
- The ejected wrapped bale B is deposited on the ground GS.
- In one embodiment every bale B rolls over the ramp 37 on the ground GS and is deposited such that a strip of the bale's circumferential surface points to the ground GS. In a further implementation a tilting unit (cf. Fig. 7) tilts the bale B around 90 degrees onto a front face. In yet a further embodiment the bale B rolls onto a further bale carrier outside of the bale wrapping chamber Ch', e.g. onto a bale accumulator or onto the wrapping table of a bale wrapper.

One guiding roller 28.1 or 28.2 delimits the two segments of the or every pressing belt 10 which surround the two chambers Ch and Ch', resp. At every time one guiding roller 28.1 or 28.2 is in a belt-guiding position and the other guiding roller 28.2 or 28.1 is in a parking position. By rotating the discs 23 around 180 degrees the rollers 28.1, 28.2 exchange their functions.

As already mentioned the bale B can be moved onto a further bale carrier after its circumferential surface is wrapped in the bale wrapping chamber Ch'. In one embodiment the entire surface of the bale is wrapped into plastic sheet. In this embodiment a combination of a continuous baler and a wrapper is provided.

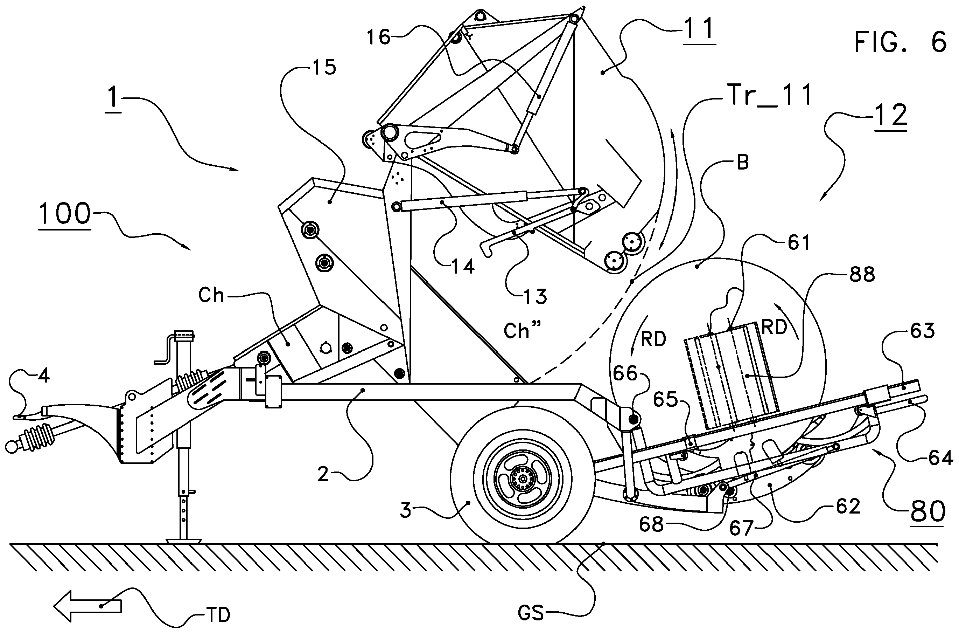

Fig. 6 shows in a side view a baler-wrapper combination 100 on board of which the invention can also be used. Identical reference signs denote parts of the combination 100 of Fig. 6 which correspond to similar parts of the baler 1 of Fig. 2 to Fig. 5.

The concept of such a baler-wrapper combination is known from EP 2434862 B1, e.g. The baler-wrapper combination 100 comprises
- a baler 1 and
- a wrapper 12 positioned behind the baler 1.

The baler 1 forms a round bale B in a bale forming and wrapping chamber Ch" serving as the further processing chamber. A buffering chamber Ch (only schematically shown) serves as the processing chamber and is positioned between the pick-up unit and the feeding channel (both not shown). While the circumferential surface of a bale in the bale forming and wrapping chamber Ch" is wrapped, further picked-up loose material is injected into the buffering chamber and is stored and pre-pressed there until the wrapped bale is ejected out of the bale forming and wrapping chamber Ch". A casing (only partially shown) surrounds the buffering chamber Ch and the bale forming and wrapping chamber Ch" whereas the wrapper 12 is positioned behind and outside of this casing. The circumferential surface of the bale B is wrapped in the bale forming and wrapping chamber Ch" into a net or plastic sheet or into several strands of twine.

The tailgate 11 is in a bale forming position while a bale B is formed in the bale forming and wrapping chamber Ch". In this embodiment the circumferential surface of the bale is wrapped while the tailgate 11 is in the bale forming position. A hydraulic or electric tailgate actuator 16 (e.g. two lateral piston-cylinder devices) can move the tailgate 11 in one movement from a bale forming position into a bale ejecting position. A locking device 13 releasable connects and locks the tailgate 11 at the front housing 15. After the locking device 13 is released by the actuator 14, the tailgate actuator 16 opens the tailgate 11.

The wrapped bale B is ejected out of the bale forming and wrapping chamber Ch" and is afterwards transferred onto a wrapping table 62 of the wrapper 12. In the embodiment the wrapping table 62 is positioned partly below the bale forming and wrapping chamber Ch" and the bale B drops onto the wrapping table 62. The wrapping table 62 rotates the bale B around the bale center axis (perpendicular to the drawing plane of Fig. 6,) in the rotating direction RD (in Fig. 6 anti-clockwise).

A wrapping device 80 wraps the entire surface of the rotated bale B on the wrapping table 62 into several layers of impermeable plastic sheet. Afterwards the wrapping table 62 is pivoted around the horizontal pivoting axis 68 (perpendicular to the drawing plane of Fig. 6). The entirely wrapped bale B rolls over the wrapping table 62 on the ground surface GS and is deposited on a suitable bale depositing location SBL. It is possible that a tilting unit (quarter turn, cf. Fig. 7) tilts the wrapped bale B onto a front face.

The wrapping device 80 comprises
- a wrapping ring 63 which carries two holders (film dispensers) belonging to a supply reel holding device 61,
- a carrying structure 64 for the wrapping ring 63,
- a hydraulic or electric actuator 67 for pivoting the carrying structure 64 around a pivoting axis 66 (adjacent to the chassis 2), and
- a drive (not shown) for rotating the wrapping ring 63 around its own rotational axis (in the drawing plane of Fig. 6 and nearly vertical to the ground GS).

As the carrying structure 64 can be pivoted around the axis 66, the wrapping device 80 can be adapted to the diameter of the rotated bale B to be wrapped. The wrapping ring 63 is rotated around the ring center axis (in the drawing plane of Fig. 6, slightly differing from a vertical direction). The rotated supply reel holding device 61 moves two supply reels 88 with two plastic films around the rotated bale B on the wrapping table 62.

If required the wrapping actuator 67 pivots the carrying structure 64 around the axis 66. Thereby the pivoting angle of the wrapping ring 63 depends on the measured diameter of the bale B to be wrapped on the wrapping table 62. When the hydraulic actuator 16 moves the tailgate 11 from the bale forming position into the bale ejecting position, the outer edge of the tailgate 11 is moved along a curved trajectory Tr_11. This trajectory Tr_11 does not overlap with the circumferential surface of the bale B on the wrapping table 62 and also not with the trajectory of the rotated holders 61 for the supply reels 88.

The wrapping table 62 of the baler-wrapper combination as shown in Fig. 6 is a first example of a further bale carrier outside of both processing chambers Ch, Ch". Fig. 7 shows a second example, namely a tilting unit 90. This tilting unit 90 comprises
- a frame 94,
- a ground-engaging wheel 91,
- two mounting points 96.1, 96.2 in which the tilting unit 90 can be connected with the baler 1 of Fig. 2 to Fig. 5 or with the baler-wrapper combination 100 of Fig. 6
- a pivotal receptacle 92 in the form of a segment of a tube,
- an actuator 93 for tilting the receptacle 92 and
- two damping elements 95.1, 95.2 which carry the receptacle 92 in a bale receiving position.

The travelling direction TD is from right to left. A wrapped bale (not shown) is moved onto the receptacle 92 being in a horizontal receiving position. The bale center axis is perpendicular to the travelling direction TD. The actuator 94 tilts the receptacle 92 upwards into an inclined bale depositing position. The bale is deposited on the ground on a front face. In the situation shown in Fig. 7 the bale is tilted to the left. In one implementation of the tilting unit 90 the actuator 93 can selectively tilt the receptacle 92 to the right or to the left.

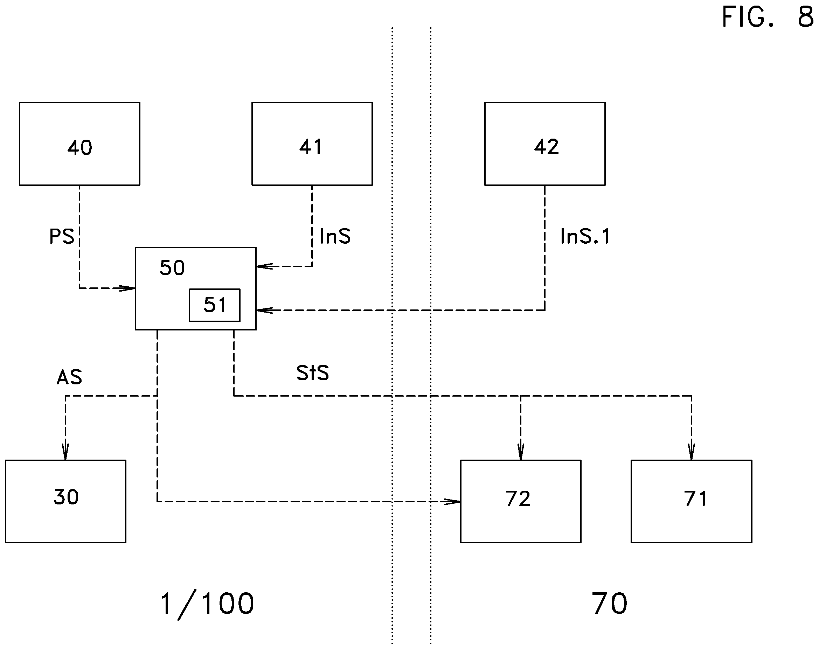

Fig. 8 shows a scheme of the control system with the baler control unit (baler controller) 50 which controls the baler 1 of the embodiment of Fig. 2 to Fig. 5 of the invention. The same control system can also be used for controlling the baler-wrapper combination 100 of Fig. 6.

The geo-position sensor 40 provides a position signal PS indicative of the current baler's geo-position to the controller 50. This position sensor 40 can be mounted on board of the baler 1 or of the pulling tractor 70. The inclination sensor 41 is mounted on board of the baler 1 and provides an inclination signal InS indicative of the inclination at the current and/or at least one future location of the baler 1 to the controller 50. The optional inclination sensor 42 is mounted on board of the pulling tractor 70 and provides an inclination signal Ins. 1 indicative of the current inclination of the tractor 70. Preferably the baler controller 50 is connected with the controller of the pulling tractor 70 by means of a data connection according to the ISObus Standard (ISO 11783).

In one embodiment the controller 50 comprises a storage device 51 comprising an electronic map showing the ground contour and the respective inclination at several locations of the ground surface GS over which the baler 1 travels and from which the baler 1 collects crop material to form bales B. The inclination map may for instance indicate the level of inclination for several locations of the ground surface GS within a given area, e.g. a field. The storage device 51 may also comprise data on the location and size of swaths of crop material created on the ground surface GS wherein the swath data is created before the baling operation, e.g. during raking of the crop material into the swaths. Thereby an amount map is provided which shows for different locations the respective amount of crop material to be picked up at this location.

These inclination values of the inclination map and the location of the swaths or amount values may for example be obtained during the mowing and/or raking of the crop material on the ground surface GS during a preceding operation but may also be made available in any other suitable way.

On the basis of the position signal PS and the data of the inclination map and/or the signals InS, InS.1, the controller 50 can determine whether the baler 1 is currently located at a suitable bale depositing location SBL on which a deposited bale B will not roll away. The inclination sensor signal InS and optionally the inclination signal InS.1 may be used as an indication of the level of inclination to determine whether a bale B can be ejected, or to check the inclination level obtained by matching the actual position with the inclination map of the ground surface GS.

If the baler 1 is located at a suitable bale depositing location SBL, the controller 50 may provide an activation signal AS to indicate that a bale B may be ejected from the baler 1. This activation signal AS activates the bale ejection device 30 comprising the actuators for the tailgate 11. The activation signal AS may be sent directly to the bale ejection device 30 to automatically deposit the bale B at the bale depositing location SBL. In one embodiment the step of ejecting and depositing the bale B is performed fully automatic. It is also possible that a human operator is informed about the possible bale ejection such that the user can interrupt the bale depositing and can later manually trigger the step of depositing the bale.

As an alternative the activation signal AS may be provided as a warning signal to the user of the baler 1 to activate the bale ejection device 30 in order to eject the bale at the suitable bale depositing location SBL. In this alternative embodiment only an activation signal AS is provided to the user to indicate that a bale is ready to be deposited and the baler 1 is located at a suitable bale depositing location SBL. The activation signal AS may for example be displayed at a display device 72 mounted on board of the pulling tractor 70 or provides an audible warning signal to the user. The user input may be a reaction on the activation signal AS generated by the controller 50.

If the baler 1 is not located at a suitable bale depositing location SBL, the controller 50 can also automatically determine a suitable bale depositing location SBL on which a deposited bale B will not roll away and will not be damaged. This suitable bale depositing location SBL is selected to enable a continuous operation or at least minimize the duration of the necessary interruptions of picking-up material while preventing an overload of the baler 1, e.g. Preferably the controller 50 also determines a trajectory from the current location to the suitable bale depositing location SBL.

In one embodiment the controller 50 is configured to provide a steering signal StS to the operator, i.e. to the driver steering the tractor 70 which pulls the baler 1. The steering signal StS may provide direction indications, e.g. on a display device 72, to steer the tractor 70 pulling the baler 1 to the suitable bale depositing location SBL. The steering indications may for instance be provided as displayed arrows in which direction the pulling tractor 70 should be steered and/or a map indicating the trajectory and the actual position, and possibly speed of the pulling tractor 70, e.g. similar to direction indications used in car navigation systems. It is also possible that acoustic signals are presented to the driver. The display device 72 is mounted in the driver's cabin of the pulling tractor 70. The display device 72 may belong to the standard equipment of the pulling tractor 70 and is in data connection with the baler controller 50 via the tractor controller, e.g. according to the ISObus standard. In addition, or as an alternative, the steering signal may be provided as an audible signal, or as another suitable signal in a human-perceptible form.

In an alternative embodiment the controller 50 is configured to provide a steering signal for an automatic steering device 71 of the pulling tractor 70. In this implementation the tractor 70 is automatically steered and pulls the baler 1 to the determined suitable bale depositing location SBL. In this embodiment the controller 50 and the automatic steering device 71 automatically steer or drive the baler 1 to the determined suitable bale depositing location SBL.

In the embodiment described above a suitable bale depositing location SBL is determined when the baler 1 is ready or almost ready to eject a bale out of the bale wrapping chamber Ch' by using the bale ejection device 30 or from the bale accumulator 90 or wrapping table 62. In a further embodiment, however, the controller 50 may also be configured to determine a trajectory comprising a path and a sequence of suitable bale depositing locations SBL along which the baler 1 can be moved to pick up the crop material from the ground surface GS. The trajectory may also be determined by another device and transferred to the storage device 51. The trajectory may be calculated in advance, i.e. before the baler 1 starts its operation. The trajectory may also be calculated or updated during operation, e.g. by calculated an amended trajectory starting in the current baler's geo-position. Calculating an amended trajectory during operation may in particular be performed if it turns out during operation that a scheduled depositing location of an initial trajectory is actually not suitable or if the actual amount of crop material on the ground GS differs from an expected amount used for calculating the initial trajectory.

The trajectory comprising several suitable bale depositing locations may be determined by considering one or more constraints and criteria, or a combination thereof. A first constraint is that it must be avoided that a deposited bale rolls downhill. A further constraint is that no further ground property value makes a depositing location being not suitable. Yet a further constraint is that the entire amount of crop material on board of the baler 1 must not exceed a given amount threshold. Thereby an overload situation is avoided.

An optimization criterion for selected the depositing locations is to minimize the time required for processing the whole ground surface GS to be processed. The trajectory should have a length as short as possible. The step of picking up crop material should be interrupted as seldom or at least as short as possible. A further criterion may be to minimize the distance along which a further vehicle has later to travel over the ground surface GS to process all deposited bales, in particular to lift the bales for transporting them away. Further constraints and criteria may also be used such as desired driving directions on a slope.

The data to be used to compute in advance a trajectory comprises a height map or contour map and/or inclination map of an area. The map is used to determine whether it is safe to eject a bale B at a potential depositing location within this area. The location and size of swaths on the ground surface GS or a crop amount map may also be used as input data to determine the trajectory to be followed comprising suitable bale depositing locations SBL. The data on the swaths is preferably acquired in advance during raking of the crop material to create the swaths. In an alternative embodiment, the trajectory is determined based on suitable bale depositing locations and is calculated before creating the swath and can be used to determine where the swaths have to be created during raking of the crop material.

Further parameters used for generating the trajectory are
- the required diameter or length or further dimension or weight of a completed bale,
- the maximal pressure to be applied onto the crop material in the bale forming chamber Ch or in the bale wrapping chamber Ch',
- the storing capacity of the bale forming chamber Ch while a completed bale is in the bale wrapping chamber Ch', and
- the maximal amount of crop material which can be on board of the baler 1.

These parameters determine the maximal amount of crop material which can be contained in one formed bale and determine how many crop material can be stored in the bale forming chamber Ch while a completed bale B is in the bale wrapping chamber Ch'. If the baler 1 comprises a further bale carrier, the capability of this further bale carrier to carry a bale to a suitable location for depositing the bale there is also considered when generating the trajectory.

When automatic use is made of a trajectory comprising suitable bale depositing locations provided by the controller 50, the controller 50 may provide a steering signal that indicates to the operator (driver), e.g. on the display device 72, the trajectory to be followed. The baler 1 may also be automatically steered along the trajectory by an automatic steering device 71 of the pulling tractor 70.

In one embodiment it is up to the operator (the tractor driver) to find a suitable path over the field. In a further embodiment the controller 50 may adapt the scheduled trajectory on the basis of data obtained during formation and/or handling of bales B. In one embodiment the controller 50 may calculate an amended trajectory during the operation of the baler 1 wherein the amended trajectory starts in the current location of the baler 1 and leads to a suitable location. This calculation of an amended trajectory may be triggered by the event that a bale cannot be deposited at the intended location and is therefore deposited at a location differing from the intended location.

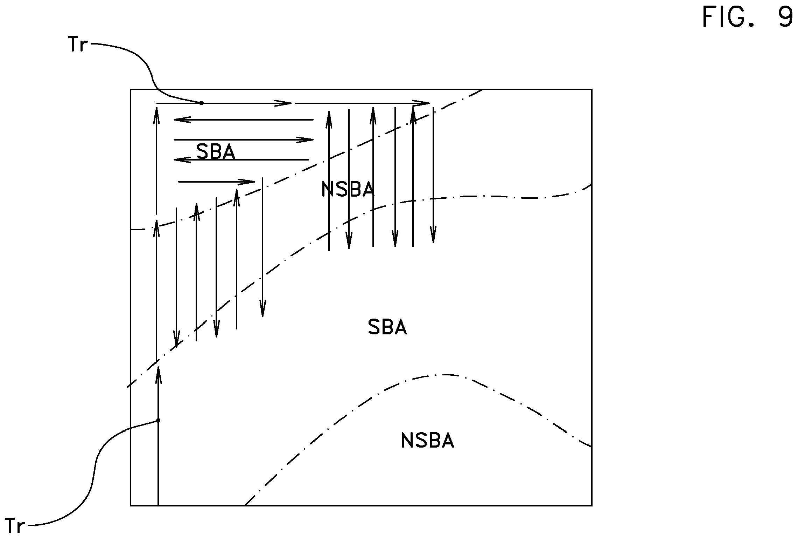

Fig. 9 shows an inclination map of a ground surface on which crop material is to be collected. The ground surface GS comprises
- several suitable bale depositing areas SBA on which a bale can safely be deposited from the baler 1, and
- several non-suitable areas NSBA where a bale cannot be safely deposited on the ground GS as a bale deposited on a non-suitable area NSBA may roll downhill or be polluted or damaged.

Crop material is to be picked-up from every suitable bale depositing area SBA and from every non-suitable area NSBA. Therefore the baler 1 has to pass every area SBA, NSBA.

In Fig. 9 a schematic example of a trajectory Tr planned on the ground surface GS is indicated by arrows. In one embodiment almost every arrow has substantially the same length, indicating that a similar quantity of crop material will be received by the baler 1 while the baler 1 is moved along each of these arrows along the trajectory Tr. Each arrow end indicates a suitable bale depositing location SBL. In the map of Fig. 9 it can be seen that each of the arrow ends is located in a suitable bale depositing area SBA, while some arrows run over a non-suitable area NSBA. The step of transferring the bale B from the bale forming chamber Ch into the bale wrapping chamber Ch' or of loose material from the buffering chamber Ch into the bale forming and wrapping chamber Ch" is in general not triggered by the trajectory Tr but by the diameter or length or weight of the non-wrapped bale in the bale forming chamber Ch or amount in the processing chamber Ch. Exceptions are described below. This transferring step can therefore also be executed when the baler 1 is in a non-suitable area NSBA.

In one embodiment some arrows have a smaller length. This feature indicates that the event is triggered that the bale in the bale forming chamber Ch is pushed into the bale wrapping chamber Ch' or that loose material is transferred from the buffering chamber Ch into the bale forming and wrapping chamber Ch". A bale is made ready for being deposited although the bale has not reached the desired diameter or length or weight. The bale B is wrapped in the bale wrapping chamber Ch' or in the bale forming and wrapping chamber Ch" and optionally further wrapped on the wrapping table 62. Immediately after the bale B is wrapped it is automatically depositing on the ground. The bale B is wrapped and deposited on the ground although the desired diameter or weight has not yet reached. This may be advantageous if the controller 50 has automatically discovered that the following situation threatens: When the bale wrapping is started after the required diameter or length or weight is reached, the controller 50 decides that the bale B cannot be deposited as the baler 1 travels in a non-suitable area NSBA. In addition the baler 1 does not reach a suitable bale depositing area SBA before the step of picking-up must be interrupted. The reason: The amount of loose material on board of the bale forming apparatus reaches the given amount threshold. In order to avoid this undesired situation, it may be advantageous, in view of efficiency, that a bale B with a smaller diameter or length or weight is deposited at a suitable bale depositing location SBL before entering an area NSBA where no bale can safely be deposited.

In an alternative or additional embodiment the baler 1 and the pulling tractor 70 may each comprise an inclination sensor 41 or 42, resp. The controller 50 may be configured to compare the inclination of the baler 1 and the pulling tractor 70 measured by both of the inclination sensor devices 41, 42. The comparison of the inclination of the baler 1 and the pulling tractor 70 may give an indication for a direction for a suitable bale depositing location SBL is obtained.

For example, when the measured baler inclination is larger than the measured tractor inclination, it may be concluded that the slope in the driving direction of the combination of the baler 1 and the pulling tractor 70 becomes less steep. As a result, further driving in the driving direction may soon result in reaching a suitable bale depositing location SBL. When, in contrast, the tractor inclination is larger than the baler inclination, it may be concluded that the slope, i.e. the inclination in the driving direction of the combination of the baler 1 and the pulling tractor 70 increases. In such case it may be advantageous to deposit a bale now, even if it has not reached the desired diameter or length or weight.

In a further alternative embodiment the inclination sensor 42 of the pulling tractor 70 can be used to predict the inclination of the baler 1 after traveling over a distance equal to the length of the pulling tractor 70. This information can be used to check whether it is safe to eject a bale as it may take some distance to eject a bale B with the bale ejection device 30 from the baler 1, in particular when this distance corresponds to the length of the pulling tractor 70.

Thanks to the bale forming chamber Ch and the bale wrapping chamber Ch' the baler 1 can operate with higher flexibility. The main constraint to be considered is the requirement that a deposited bale B must not roll downhill, i.e. must be deposited on a suitable bale location SBL, and that no further ground property value makes a depositing location being not suitable. The constraints stemming from the baler 1 itself are
- the maximal overall amount, e.g. the weight or volume, of picked-up or otherwise received crop material which can be carried on board of the baler 1,
- the maximum amount of crop material which can be contained in the bale forming chamber Ch,
- the maximal possible diameter of a bale B in the bale wrapping chamber Ch' or bale forming and wrapping chamber Ch", and
- in one embodiment the relationship between the current diameter of a bale B in the bale wrapping chamber Ch' and the respective maximal crop material amount in the bale forming chamber Ch which can be carried when the bale B in the bale wrapping Ch' has this diameter.

In the case of the baler-wrapper combination 100 of Fig. 8 the maximal possible diameter of a bale B on the wrapping table 62 provides one further constraint.

In addition a maximal pressure to be applied in the bale forming chamber Ch or bale forming and wrapping chamber Ch" onto the crop material and a desired diameter of an ejected wrapped bale is given. In the case of a variable chamber Ch, Ch', Ch" this desired diameter may be smaller than the maximal possible diameter. In general the operator determines this desired diameter. These further constraints may apply to both embodiments of the baler 1.

In a simple embodiment the controller 50 only processes the measured current inclination of the baler 1. The bale B is always transferred from the bale forming chamber Ch into the bale wrapping Ch' and is wrapped there or in the bale forming and wrapping chamber Ch" if the bale B in the bale forming chamber Ch has reached the required diameter or weight. The wrapped bale B in the bale wrapping chamber Ch' is deposited on the ground GS as soon as the baler 1 reaches a suitable bale depositing location SBL. If the bale forming chamber Ch cannot take crop material which is picked up while the bale B is wrapped in the bale wrapping chamber Ch' or on the wrapping table 62, the pick-up unit 5 is temporarily deactivated, preferably by disconnecting the pick-up drum drive and by lifting the pick-up unit 5 away from the ground GS.

In a further embodiment the field - in general: that segment of the earth surface - over which the baler 1 is moved is divided in advance into at least one suitable bale depositing area SBA and - if necessary - at least non-suitable area NSBA. The safe areas SBA and non-suitable areas NSBA are detected and defined depending on inclination values and further ground property values for several locations on the field, cf. Fig. 9. The following steps are only required if at least one non-suitable area NSBA is detected.

In one implementation the current amount of crop material in the bale forming chamber Ch is measured, e.g. by measuring the current diameter of the bale forming chamber Ch. The chamber diameter is equal to the bale diameter. The current pivoting angle of a tensioning device for the pressing belt(s) 10 can be measured and can serve as a value indicative of the chamber diameter. If the baler 1 is currently on a suitable bale depositing area SBA but is to be moved into a non-suitable area NSBA, a prediction is made whether the baler 1 will pass the non-suitable area NSBA and will reach again a suitable depositing area SBA until one capacity threshold of the baler 1 is reached. If this is not the case, i.e. the baler 1 will not reach a suitable bale depositing area SBA, the bale in the bale forming chamber Ch is transferred into the bale wrapping chamber Ch' and is wrapped and deposited before the baler 1 leaves the suitable bale depositing area SBA and enters the non-suitable area NSBA. The prediction makes use of a measured or estimated amount of crop material to be picked up while the baler 1 passes the non-suitable area NSBA.

In yet a further embodiment it is inhibited that the diameters of the deposited bales differs too much from each other. To reach this goal, at least one simulation run with one given bale diameter is made in advance on a computer. Again an estimated crop material amount along the swath is given. In addition a diameter tolerance is given. In the or every simulation run a trajectory is given on a trial base. Using this trajectory it is calculated at which locations of this given trajectory the bale in the bale forming chamber Ch will reach the given diameter. It is automatically investigated if this location is in a suitable bale depositing area SBA or in a non-suitable area NSBA.

If at least one bale cannot be deposited on a suitable bale depositing location SBL, at least one of the following measures is taken:
- A new simulation run is performed wherein the diameter of at least one bale is varied within the given tolerance, i.e. this bale is - in the simulation run - deposited slightly earlier or slightly later.
- The requirement that every deposited bale has - within the given diameter tolerance - the same diameter is weakened. Only all bales with the exception of n bales have the same diameter and the n other bales have smaller and/or larger diameters. The number n is given.
- A new value for the common bale diameter is given and the new simulation run with the new given diameter value is performed.
- The trajectory is amended.

As a result of the simulation runs a scheduled common bale diameter and a scheduled trajectory Tr with several suitable bale depositing locations SBL are provided. The baler 1 can operate according to this scheduled trajectory without the need of interrupting the step of picking up loose material from the ground GS. As mentioned above it may be possible that during operation it turns out that a scheduled depositing location is not a suitable depositing location. Preferably an amended trajectory is calculated during operation.

Reference signs used in the claims will not limit the scope of the claimed invention. The term "comprises" does not exclude other elements or steps. The articles "a", "an", and "one" do not exclude a plurality of elements. Features specified in several depending claims may be combined in an advantageous manner.

**LIST OF REFERENCE SIGNS**

| | |
|---|---|
| 1 | bale forming apparatus with the bale forming chamber Ch |
| 2 | chassis of bale forming apparatus 1 |
| 3 | ground-engaging wheels of bale forming apparatus 1 |
| 4 | front end of the bale forming apparatus 1 with towing unit |
| 5 | feeding channel for conveying picked-up crop material to an outlet 7 |
| 6 | pick-up unit |
| 7 | outlet of the feeding channel 5, serves as the crop material inlet |
| 8.1, 8.2 | stationary driven starter rollers, delimit the crop material inlet 7 |
| 9 | bale forming device, comprises the or every endless pressing belt 10 and the starter rollers 8.1, 8.2 |
| 10 | driven endless pressing belt(s), belong to the bale forming device 9 |
| 11 | pivotal tailgate, serves as the pivotal discharge gate, comprises the tailgate frame 17 and the tailgate bottom 18 |
| 12 | wrapper behind the baler 1, belongs to the baler-wrapper combination 100 |
| 13 | locking device for releasably locking the tailgate 11 at the front housing 15 |
| 14 | hydraulic actuator for moving the locking device 13 |
| 15 | stationary front housing |
| 16 | hydraulic or electric tailgate actuator for moving the tailgate 11 |
| 17 | tailgate frame, carries the wrapping device 20 |
| 18 | pivotal tailgate bottom, belongs to the bale carrier of the preferred embodiment |
| 19 | tailgate bottom roller, mounted at tailgate bottom 18 |
| 20 | wrapping device mounted at the tailgate 11 comprises an unrolling station for carrying a supply reel 88 for wrapping material |
| 22 | pivoting axis of the tailgate bottom 18 with respect to the tailgate frame 17 |
| 23 | supporting disks, carries the pushing rollers 24.1, 24.2 |
| 24.1 | pushing roller, pushes the second bale B' onto the tailgate bottom 18 |
| 24.2 | further pushing roller, pushes the first bale B |
| 25 | common rotating axis of supporting disks 23 |
| 28.1, 28.2 | pivotal guiding rollers for the belt(s) 10 |
| 30 | bale ejection device, can comprise a bale accumulator |
| 32 | coupling device, comprises the disk engaging hook 33 the coupling pins 34.1, 34.2, ... and the disk locking cylinder 83 |
| 33 | disk engaging hook of the coupling device, can engage one coupling pin 34.1, 34.2, 34.3 |
| 34.1, 34.2, 34.3 | coupling pins which can be coupled with the disk engaging hook 33 |
| 35 | hydraulic actuator for the supporting disks 23 |
| 36 | fixed guiding roller above the starter roller 8.1 |
| 37 | pivotal ramp over which a wrapped bale B rolls on the ground |
| 40 | geoposition sensor |
| 41 | inclination sensor, mounted on board of the baler 1 or the baler-wrapper combination 100 |
| 42 | further inclination sensor, mounted on board of the pulling tractor 70 |
| 50 | controller of bale forming apparatus 1, serving as the baler computer |
| 51 | storage device of controller 50 |
| 60 | lever carrying a deflecting roller for the pressing belt(s) 10 |
| 61 | supply reel holding device, mounted on the wrapping ring 63 |
| 62 | wrapping table, rotates a bale B to be wrapped, belongs to a further bale carrier |
| 63 | wrapping ring, carries the supply reel holding device 61 |
| 64 | carrying structure for the wrapping ring 63 |
| 65 | rollers on the carrying structure 64 for enabling the rotation of the wrapping ring 63 |
| 66 | pivoting axis of the carrying structure 64 |
| 67 | hydraulic or electric wrapping actuator for pivoting the carrying structure 64 |
| 68 | pivoting axis of the wrapping table 62 |
| 70 | tractor pulling the baler 1, optionally comprises the further inclination sensor 42 |
| 71 | automatic steering device of the pulling tractor 70 |
| 72 | display device in the driver's cab of the pulling tractor 70 |
| 80 | wrapping device for wrapping a bale B on the wrapping table 62 |
| 83 | disk locking cylinder of the coupling device 32 |
| 88 | supply reel for wrapping material |
| 90 | tilting unit, serves as a further bale carrier |
| 91 | ground-engaging wheel of the tilting unit 90 |
| 92 | arcuate receptacle for receiving a wrapped bale |
| 93 | hydraulic actuator for tilting the receptacle 92 |
| 94 | frame of the tilting unit 90 |
| 95.1, 95.2 | damping elements for holding the receptacle 92 in a horizontal position |
| 96.1, 96.2 | mounting points of the tilting unit 90 |
| 100 | baler-wrapper combination, comprising the baler 1 and the wrapper 12 |
| AS | activation signal |
| B | first bale |
| B' | second bale, increases while the first bale B is wrapped |
| Ch | bale forming chamber |
| Ch' | bale wrapping chamber |
| Ch" | bale forming and wrapping chamber |
| G.I | large gap between the front housing 15 and the tailgate 11 being in the bale wrapping position |
| G.s | small gap between the front housing 15 and the tailgate 11 being in the bale wrapping position |
| GS | ground surface |
| InS | inclination signal provided by the inclination sensor 41 |
| InS.1 | inclination signal provided by the inclination sensor 42 on board of the tractor 70 |
| NSBA | non-suitable area |
| N | nip between the front housing 15 and the tailgate 11 being in the bale forming position |
| PS | position signal provided by the geoposition sensor 40 |
| RD | rotating direction of the bale B on the wrapping table 62 |
| SBA | suitable bale depositing areas |
| StS | steering signal for steering the pulling tractor 70 |
| SBL | suitable bale depositing location |
| TD | travelling direction of the bale forming apparatus 1 |
| Tr | planned trajectory of the baler 1 over ground with several suitable bale depositing locations SBL |
| Tr_11 | trajectory of the outer edge of the tailgate 11 |

## Claims

1. Method for forming a plurality of bales (B) on board of a bale forming apparatus (1),
wherein the bale forming apparatus (1) comprises
- a processing device (9) providing a processing chamber (Ch),
- a bale carrier (18) positioned outside of the provided processing chamber (Ch),
- a baler computer (50), and
- at least one ground property sensor (41, 42),
wherein the bale carrier (18) is arranged for carrying at least one bale (B),
wherein the formation of a bale (B) comprises the steps that the bale forming apparatus (1)
- is moved over ground (GS),
- receives loose material,
- injects received loose material into the processing chamber (Ch),
- processes injected loose material in the processing chamber (Ch) by means of the processing device (9),
- transfers processed loose material from the processing chamber (Ch) onto the bale carrier (18),
- forms the bale (B) such that the formed bale (B) is ready for being deposited onto the ground (GS), and
- deposits the formed bale (B) from the bale carrier (18) onto the ground (GS), wherein for every bale (B) of the plurality the further steps are performed at least once that
- the or one ground property sensor (41, 42) measures at least one value (InS) indicative of a property of the ground (GS) occurring at the current location of the bale forming apparatus (1), and
- the baler computer (50) makes at least one time depending on the or at least one measured ground property value (InS) automatically a decision whether or not the current location is suitable for depositing the bale (B) there, **characterized in that** the bale forming apparatus (1) provides at least temporarily a further processing chamber (Ch', Ch") which is positioned vertically or angularly above the bale carrier (18),
wherein the step that processed loose material is transferred from the processing chamber (Ch) onto the bale carrier (18) comprises the step that
processed loose material is moved from the processing chamber (Ch) into the further processing chamber (Ch', Ch"),
wherein the step that a bale (B) of the plurality is formed comprises the steps that
- the moved loose material is further processed in the further processing chamber (Ch', Ch") and
- the formation of the bale (B) is completed in the further processing chamber (Ch', Ch"), and
wherein the step that a formed bale (B) is deposited on the ground (GS)
- comprises the step that the formed bale (B) is moved out of the further processing chamber (Ch', Ch") and
- is performed after the bale forming apparatus (1) is moved over ground (GS) to a location suitable for depositing this bale (B) wherein the bale forming apparatus (1) is moved over ground (GS) in an area (SBA, NSBA) and the method comprises the further steps that the or one ground property sensor (41, 42) measures at least one value (Ins) indicative of the or at least one ground property occurring at a location of the area (SBA, NSBA) which is different from the current location of the bale forming apparatus (1) and depending on the measured ground property value (InS) the baler computer (50) makes a decision if this different location is suitable for depositing a bale (B) there, wherein the step of injecting loose material into the processing chamber (Ch) is temporarily interrupted if
- a value indicative of the amount of loose material in the processing chamber (Ch) reaches a given or calculated amount threshold and
a bale (B) is still formed or carried in the further processing chamber (Ch', Ch").

2. Bale forming method according to claim 1, **characterized in that**
the amount threshold is automatically calculated while the bale forming apparatus (1) is moved over ground (GS),
wherein the amount threshold is calculated depending on a value indicative of the amount of loose material in the further processing chamber (Ch', Ch").

3. Bale forming method according to claim 1 or claim 2, **characterized in that**
the method comprises the further steps that
- the interruption is terminated and loose material is injected in the processing chamber (Ch) after the formed bale (B) is moved out of the further processing chamber (Ch', Ch") and
- processed loose material is transferring from the processing chamber (Ch) into the further processing chamber (Ch', Ch").

4. Bale forming method according to one of the preceding claims, **characterized in that**
the step of receiving loose material is temporarily interrupted if
a value indicative of the amount of loose material on board of the bale forming apparatus (1) reaches a given amount threshold and
the interruption is terminated and loose material is received again
after the or one bale (B) is deposited on the ground (GS).

5. Bale forming method according to one of the preceding claims, **characterized in that**
the result that the or at least one different location is not suitable for depositing a bale (B) there triggers the step that
- the formation of a bale (B) in the further processing chamber (Ch) is completed and
- the formed bale (B) is deposited on the ground (GS) as soon as the bale forming apparatus (1) reaches a suitable location.

6. Bale forming method according to claim 5, **characterized in that**
the result that the different location is not suitable triggers the further step that processed loose material
- is transferred from the processing chamber (Ch) into the further processing chamber (Ch', Ch") and
- is used for forming the bale (B).

7. Bale forming method according to one of the preceding claims, **characterized in that**
the method comprises the further steps that
a trajectory (Tr) is generated while the bale forming apparatus (1) moves over ground (GS),
wherein the trajectory (Tr) comprises
- the current location of the bale forming apparatus (1) and
- at least one location in the area (SBA, NSBA) which is different from the current location of the bale forming apparatus (1) and which is - according to the measured ground property value - suitable for depositing a bale (B) there, wherein the trajectory (Tr) is calculated depending on the or one measured ground property value for the or at least one different location, and
wherein the trajectory (Tr) is used for further moving the bale forming apparatus (1) over ground (GS) from the current location towards the or one suitable location.

8. Bale forming method according to claim 7, **characterized in that**
- a value indicative of the amount of loose material currently being in the processing chamber (Ch) and/or
- a value indicative of the amount of loose material currently being in the further processing chamber (Ch)
is measured and
the trajectory (Tr) is calculated further depending on the or at least one measured amount value.

9. Bale forming method according to one of the preceding claims, **characterized in that**
the step that the or one ground property value (Ins) occurring at the location different from the current locating is measured
is performed by applying a first measuring method and
the method comprises the further steps that
- the bale forming apparatus (1) is moved to the different location,
- the or one ground property sensor (41, 42) measures the value (InS) of the or one ground property occurring at the different location now being the current location
- by applying a second measuring method being different from the first measuring method, and
- the bale (B) is deposited at this location if the first as well as the second measuring method yield the result that this location is suitable.

10. Bale forming method according to one of the preceding claims, **characterized in that**
a respective required final value for every property of a bale (B) of the plurality is given, wherein the method comprises the further step that
an expected completion area is calculated
such that the bale forming apparatus (1) will reach the calculated expected completion area
when the bale property value for the or one bale (B) formed on board of the bale forming apparatus (1) reaches the required final value,
wherein the calculated expected completion area comprises the or one different location for which the or one ground property value (InS) is measured.

11. Bale forming method according to claim 10, **characterized in that**
the bale forming apparatus (1) deposits the or one bale (B) on the ground (GS) before the bale property value for the bale (B) reaches the required final value if no location within the completion area is suitable for depositing the bale (B) there.

12. Bale forming method according to one of the preceding claims, **characterized in that**
an amount threshold for the maximal amount of loose material which can be carried on board of the bale forming apparatus (1) is given,
wherein the method comprises the further step that
an expected amount area is calculated
such that the bale forming apparatus (1) will reach or will be within the calculated expected amount area when the amount of loose material on board of the bale forming apparatus (1) reaches the given amount threshold,
wherein the expected amount area comprises the or one different location for which the or one ground property value (InS) is measured.

13. Bale forming method according to one of the preceding claims, wherein the step that loose material is received comprises the step that the bale forming apparatus (1) picks up loose material from the ground (GS) while moving over ground (GS),
wherein the step of picking up loose material is at least temporarily also performed while the picked-up, processed, and transferred loose material is further processed in the further processing chamber (Ch', Ch").and is**characterized in that** the step of picking up loose material from the ground (GS) is temporarily interrupted if
- a value indicative of the amount of loose material in the processing chamber (Ch) reaches a given threshold and
- the formed bale (B) is still carried on board of the bale forming apparatus (1).

14. Bale forming method according to one of the preceding claims, **characterized in that**
the bale forming apparatus (1) is mechanically connected with a further vehicle (70) comprising a further ground property sensor (42),
wherein the bale forming apparatus (1) and the further vehicle (70) jointly move over ground (GS),
wherein the step that the baler computer (50) makes the decision whether the current and/or a further location is suitable is performed
- depending on the or one ground property value (Ins) measured by the ground property sensor (41) of the bale forming apparatus (1) and additionally
- depending on the or one ground property value (Ins.1) measured by the ground property sensor (42) of the further vehicle (70).

15. Bale forming apparatus for forming a plurality of bales (B)
wherein the bale forming apparatus (1) comprises
- a processing device (9) providing a processing chamber (Ch),
- at least one bale carrier (18) positioned outside of the provided processing chamber (Ch),
- a baler computer (50), and
- at least one ground property sensor (41, 42),
wherein the bale carrier (18) is arranged for carrying at least one bale (B),
wherein the bale forming apparatus (1) is arranged
- to be moved over ground (GS),
- to receive loose material,
- to inject received loose material into the processing chamber (Ch),
- to process injected loose material in the processing chamber (Ch) by means of the processing device (9),
- to transfer processed loose material from the processing chamber (Ch) onto the or one bale carrier (18),
- to form a bale (B) such that the formed bale (B) is ready for being deposited on the ground (GS), and
- to deposit the formed bale (B) from the bale carrier (18) onto the ground (GS),
wherein the or every ground property sensor (41, 42) is arranged to measure at least one value (InS) indicative of a property of the ground (GS) occurring at the current location of the bale forming apparatus (1), and
wherein the baler computer (50) is arranged to make depending on the or at least one measured ground property value (Ins) a decision whether or not the current location is suitable for depositing there at least one bale (B) currently being on board of the bale forming apparatus (1), **characterized in that** the bale forming apparatus (1) is arranged for providing a further processing chamber (Ch', Ch") which is positioned vertically or angularly above the or one bale carrier (18),
wherein the bale forming apparatus (1) is arranged
- to move processed loose material from the processing chamber (Ch) into the further processing chamber (Ch', Ch"),
- to further process moved loose material in the further processing chamber (Ch', Ch"),
- to complete the formation of the bale (B) in the further processing chamber (Ch', Ch"), and
- to be moved over ground (GS) until it reaches a location suitable for depositing at least one formed bale (B) there wherein
the or one ground property sensor (41, 42) is arranged to measure a value indicative of the or one ground property occurring at a location which is different from the current location of the bale forming apparatus (1) and
the baler computer (50) is arranged to decide depending on the or at least one measured ground property value (Ins) whether this different location is suitable for depositing a bale (B) there.

16. Bale forming apparatus according to claim 15, **characterized in that**
the baler computer (50) is arranged to calculate a trajectory (Tr) which comprises
- the current location of the bale forming apparatus (1) and
- at least one suitable location which is different from the current location and
the baler computer (50) is further arranged to generate control outputs for guiding or steering the bale forming apparatus (1) to the suitable different location along the generated trajectory (Tr).

## Patentansprüche

1. Verfahren zum Bilden einer Mehrzahl von Ballen (B) an Bord einer ballenbildenden Vorrichtung (1),
wobei die ballenbildende Vorrichtung (1)
- eine Verarbeitungseinrichtung (9), die eine Verarbeitungskammer (Ch) bereitstellt,
- einem Ballenträger (18), der außerhalb der bereitgestellten Verarbeitungskammer (Ch), angeordnet ist,
- einen Ballenpressencomputer (50) und
- mindestens einen Untergrundeigenschaftssensor (41, 42)
aufweist,
wobei der Ballenträger (18) zum Tragen mindestens eines Ballens (B) eingerichtet ist,
wobei die Bildung eines Ballens (B) die Schritte aufweist, dass die ballenbildende Einrichtung (1)
- über Untergrund (GS) bewegt wird,
- loses Material aufnimmt,
- aufgenommenes loses Material in die Verarbeitungskammer (Ch) einspeist,
- eingespeistes loses Material in der Verarbeitungskammer (Ch) mittels der Verarbeitungseinrichtung (9) verarbeitet,
- verarbeitetes loses Material aus der Verarbeitungskammer (Ch) auf den Ballenträger (18) überführt,
- den Ballen (B) so bildet, dass der gebildete Ballen (B) fertig zum Ablegen auf dem Untergrund (GS) ist, und
- den gebildeten Ballen (B) von dem Ballenträger (18) auf dem Untergrund (GS) ablegt, wobei für jeden Ballen (B) der Mehrzahl die weiteren Schritte mindestens einmal durchgeführt werden, dass
- der oder ein Untergrundeigenschaftssensor (41, 42) mindestens einen Wert (InS) misst, welcher eine Eigenschaft des Untergrunds (GS), die an dem derzeitigen Ort der ballenbildenden Vorrichtung (1) auftritt, anzeigt, und
- der Ballenpressencomputer (50) mindestens einmal abhängig von dem oder mindestens einem gemessenen Untergrundeigenschaftenwert (InS) automatisch eine Entscheidung fällt, ob der derzeitige Ort zum dortigen Ablegen des Ballens (B) geeignet ist oder nicht, **dadurch gekennzeichnet, dass**
die ballenbildende Vorrichtung (1) zumindest vorübergehend eine weitere Verarbeitungskammer (Ch', Ch") bereitstellt, die vertikal oder unter einem Winkel oberhalb des Ballenträgers (18) angeordnet ist,
wobei der Schritt, dass verarbeitetes loses Material aus der Verarbeitungskammer (Ch) auf den Ballenträger (18) überführt wird, den Schritt aufweist, dass
verarbeitetes loses Material aus der Verarbeitungskammer (Ch) in die weitere Verarbeitungskammer (Ch', Ch") bewegt wird,
wobei der Schritt, das ein Ballen (B) der Mehrzahl gebildet wird, die Schritte aufweist, dass
- das bewegte lose Material in der weiteren Verarbeitungskammer (Ch', Ch") weiter verarbeitet wird und
- die Bildung des Ballens (B) in der weiteren Verarbeitungskammer (Ch', Ch") komplettiert wird, und
wobei der Schritt, dass ein gebildeter Ballen (B) auf dem Untergrund (GS) abgelegt wird
- den Schritt aufweist, dass der gebildete Ballen (B) aus der weiteren Verarbeitungskammer (Ch', Ch") heraus bewegt wird, und
- ausgeführt wird, nachdem die ballenbildende Vorrichtung (1) über Untergrund (GS) zu einem Ort bewegt worden ist, der für das Ablegen dieses Ballens (B) geeignet ist,
wobei die ballenbildende Vorrichtung (1) in einem Bereich (SBA, NSBA) über Untergrund (GS) bewegt wird und das Verfahren die weiteren Schritte aufweist, dass der oder ein Untergrundeigenschaftensensor (41, 42) mindestens einen Wert (Ins) misst, der die oder mindestens eine Untergrundeigenschaft, die an einem Ort des Bereichs (SBA, NSBA) auftritt, welcher sich von dem derzeitigen Ort der ballenbildenden Vorrichtung (1) unterscheidet, anzeigt, und der Ballenpressencomputer (50) abhängig von dem gemessenen Untergrundeigenschaftenwert (InS) eine Entscheidung fällt, wenn dieser unterschiedliche Orte zum dortigen Ablegen eines Ballens (B) geeignet ist, wobei
der Schritt des Einspeisens von losem Material in die Verarbeitungskammer (Ch) vorrübergehend unterbrochen wird, falls
- ein Wert, der eine Menge von losem Material in der Verarbeitungskammer (Ch) anzeigt, einen vorgegebenen oder berechneten Mengengrenzwert erreicht, und
- in der weiteren Verarbeitungskammer (Ch', Ch") noch ein Ballen (B) gebildet oder mitgeführt wird.

2. Ballenbildendes Verfahren nach Anspruch 1,
**dadurch gekennzeichnet, dass**
der Mengengrenzwert automatisch berechnet wird, während die ballenbildende Vorrichtung (1) über Untergrund (GS) bewegt wird,
wobei der Mengengrenzwert abhängig von einem Wert berechnet wird, der die Menge von losem Material in der weiteren Verarbeitungskammer (Ch', Ch") anzeigt.

3. Ballenbildendes Verfahren nach Anspruch 1 oder Anspruch 2,
**dadurch gekennzeichnet, dass**
das Verfahren weiterhin die Schritte aufweist, dass
- die Unterbrechung beendet und loses Material in die Verarbeitungskammer (Ch', Ch") eingespeist wird, nachdem der gebildete Ballen (B) aus der weiteren Verarbeitungskammer (Ch', Ch") herausbewegt ist und
- verarbeitetes loses Material aus der Verarbeitungskammer (Ch) in die weitere Verarbeitungskammer (Ch', Ch") übergeht.

4. Ballenbildendes Verfahren nach einem der vorhergehenden Ansprüche,
**dadurch gekennzeichnet, dass**
der Schritt des Aufnehmens von losem Material vorübergehend unterbrochen wird, falls ein Wert, der die Menge an losem Material an Bord der ballenbildenden Vorrichtung (1) anzeigt, einen vorgegebenen Mengengrenzwert erreicht, und
die Unterbrechung beendet wird und loses Material erneut aufgenommen wird, nachdem der oder ein Ballen (B) auf dem Untergrund (GS) abgelegt ist.

5. Ballenbildendes Verfahren nach einem der vorhergehenden Ansprüche,
**dadurch gekennzeichnet, dass**
das Resultat, dass der oder mindestens ein anderer Ort zum dortigen Ablegen eines Ballens (B) nicht geeignet ist, den Schritt auslöst, dass
- die Bildung eines Ballens (B) in der weiteren Verarbeitungskammer (Ch) komplettiert wird und
- der gebildete Ballen (B) auf dem Untergrund (GS) abgelegt wird, sobald die ballenbildende Vorrichtung (1) einen geeigneten Ort erreicht.

6. Ballenbildendes Verfahren nach Anspruch 5,
**dadurch gekennzeichnet, dass**
das Resultat, dass der unterschiedliche Ort nicht geeignet ist, den weiteren Schritt auslöst, dass verarbeitetes loses Material
- aus der Verarbeitungskammer (Ch) in die weitere Verarbeitungskammer (Ch', Ch") überführt wird und
- zum Bilden des Ballens (B) verwendet wird.

7. Ballenbildendes Verfahren nach einem der vorhergehenden Ansprüche,
**dadurch gekennzeichnet, dass**
das Verfahren den weiteren Schritt aufweist, dass
eine Trajektorie (Tr) generiert wird, während sich die ballenbildende Vorrichtung (1) über Untergrund (GS) bewegt,
wobei die Trajektorie (Tr)
- den derzeitigen Ort der ballenbildenden Vorrichtung (1) und
- mindestens einen Ort in dem Bereich (SBA, NSBA), der sich von dem derzeitigen Ort der ballenbildenden Vorrichtung (1) unterscheidet und der - gemäß dem gemessenen Untergrundeigenschaftenwert - zum dortigen Ablegen eines Ballens (B) geeignet ist, aufweist,
wobei die Trajektorie (Tr) abhängig von dem oder einem gemessenen Untergrundeigenschaftenwert für den oder mindestens einen unterschiedlichen Ort berechnet wird, und
wobei die Trajektorie (Tr) zum weiteren Bewegen der ballenbildenden Vorrichtung (1) über Untergrund (GS) von dem derzeitigen Ort zu dem oder einem geeigneten Ort verwendet wird.

8. Ballenbildendes Verfahren nach Anspruch 7,
**dadurch gekennzeichnet, dass**
- ein Wert, der die Menge von losem Material, die derzeit in der Verarbeitungskammer (Ch) ist, anzeigt und/oder
- ein Wert, der die Menge von losem Material, die derzeit in der weiteren Verarbeitungskammer (Ch) ist, anzeigt,
gemessen wird und
die Trajektorie (Tr) weiterhin abhängig von dem oder mindestens einem gemessenen Mengenwert berechnet wird.

9. Ballenbildendes Verfahren nach einem der vorhergehenden Ansprüche,
**dadurch gekennzeichnet, dass**
der Schritt, dass der oder ein Untergrundeigenschaftenwert (Ins), der an dem von dem derzeitigen Ort unterschiedlichen Ort auftritt, gemessen wird,
ausgeführt durch Anwenden eines ersten Messverfahrens, und
das Verfahren die weiteren Schritte aufweist, dass
- die ballenbildende Vorrichtung (1) zu dem unterschiedlichen Ort bewegt wird,
- der oder ein Untergrundeigenschaftensensor (41, 42) den Wert (InS) der oder einer Untergrundeigenschaft, die an dem unterschiedlichen Ort, der jetzt der derzeitige Ort ist, auftritt, misst
- durch Anwenden eines zweiten Messverfahrens, das sich von dem ersten Messverfahren unterscheidet, und
- der Ballen (B) an diesem Ort abgelegt wird, falls sowohl das erste als auch das zweite Messverfahren das Ergebnis ergibt, dass der Ort geeignet ist.

10. Ballenbildendes Verfahren nach einem der vorhergehenden Ansprüche,
**dadurch gekennzeichnet, dass**
für jede Eigenschaft eines Ballens (B) der Mehrzahl ein entsprechender geforderter Endwert vorgegeben ist,
wobei das Verfahren den weiteren Schritt aufweist, dass
ein erwarteter Vervollständigungsbereich berechnet wird,
so dass die ballenbildende Vorrichtung (1) den berechneten erwarteten Vervollständigungsbereich erreicht,
wenn die der Balleneigenschaftenwert für den oder einen Ballen (B), der an Bord der ballenbildenden Vorrichtung (1) gebildet wird, den geforderten Endwert erreicht,
wobei der berechnete erwartete Vervollständigungsbereich den oder einen unterschiedlichen Ort aufweist, für den der oder ein Untergrundeigenschaftenwert (InS) gemessen wird.

11. Ballenbildendes Verfahren nach Anspruch 10,
**dadurch gekennzeichnet, dass**
die ballenbildende Vorrichtung (1) den oder einen Ballen (B) auf dem Untergrund (GS) ablegt, bevor der Balleneigenschaftenwert für den Ballen (B) den geforderten Endwert erreicht, falls kein Ort innerhalb des Vervollständigungsbereichs zum dortigen Ablegen des Ballens (B) geeignet ist.

12. Ballenbildendes Verfahren nach einem der vorhergehenden Ansprüche,
**dadurch gekennzeichnet, dass**
für die maximale Menge an losem Material, die an Bord der ballenbildenden Vorrichtung (1) mitgeführt werden kann, ein Mengengrenzwert vorgegeben ist,
wobei das Verfahren den weiteren Schritt aufweist, dass
ein erwarteter Mengenbereich berechnet wird,
so dass die ballenbildende Vorrichtung (1) den berechneten erwarteten Mengenbereich erreichen oder sich darin befinden wird, wenn die Menge an losem Material an Bord der ballenbildenden Vorrichtung (1) den vorgegebenen Mengengrenzwert erreicht,
wobei der erwartete Mengenbereich den oder einen unterschiedlichen Ort aufweist, für den der oder ein Untergrundeigenschaftenwert (InS) gemessen wird.

13. Ballenbildendes Verfahren nach einem der vorhergehenden Ansprüche,
wobei der Schritt, dass loses Material aufgenommen wird, den Schritt aufweist, dass die ballenbildende Vorrichtung (1) loses Material von dem Untergrund (GS) aufgreift, während sie sich über Untergrund (GS) bewegt,
wobei der Schritt des Aufgreifens von losem Material mindestens vorübergehend auch ausgeführt wird, während das aufgegriffene, verarbeitete und überführte lose Material in der weiteren Verarbeitungskammer (Ch', Ch") weiter verarbeitet wird, und **dadurch gekennzeichnet ist, dass** der Schritt des Aufgreifens von losem Material vom Untergrund (GS) vorübergehend unterbrochen wird, falls
- ein Wert, der die Menge von losem Material in der Verarbeitungskammer (Ch) anzeigt, einen vorgegebenen Grenzwert erreicht, und
- der gebildete Ballen (B) weiterhin an Bord der ballenbildenden Vorrichtung (1) mitgeführt wird.

14. Ballenbildendes Verfahren nach einem der vorhergehenden Ansprüche,
**dadurch gekennzeichnet, dass**
die ballenbildende Vorrichtung (1) mechanisch mit einem weiteren Fahrzeug (70) verbunden ist, das einen weiteren Untergrundeigenschaftensensor (42) aufweist,
wobei sich die ballenbildende Vorrichtung (1) das weitere Fahrzeug (70) miteinander verbunden über Untergrund (GS) bewegen,
wobei der Schritt, dass der Ballenpressencomputer (50) die Entscheidung fällt, ob der derzeitige und/oder ein weiterer Ort geeignet ist, durchgeführt wird
- abhängig von dem oder einem Untergrundeigenschaftenwert (Ins), der von dem Untergrundeigenschaftensensor (41) der ballenbildenden Vorrichtung (1) gemessen wird, und zusätzlich
- abhängig von dem oder einem Untergrundeigenschafgenwert (Ins.1), der von dem Untergrundeigenschaftensensor (42) des weiteren Fahrzeugs (70) gemessen wird.

15. Ballenbildende Vorrichtung zum Bilden einer Mehrzahl von Ballen (B),
wobei die ballenbildende Vorrichtung (1)
- eine Verarbeitungseinrichtung (9), die eine Verarbeitungskammer (Ch) bereitstellt,
- mindestens einen Ballenträger (18), der außerhalb der bereitgestellten Verarbeitungskammer (Ch) angeordnet ist,
- einen Ballenpressencomputer (50) und
- mindestens einen Untergrundeigenschaftensensor (41, 42)
aufweist,
wobei der Ballenträger (18) zum Tragen mindestens eines Ballens (B) eingerichtet ist,
wobei die ballenbildende Vorrichtung (1) eingerichtet ist,
- um über Untergrund (GS) bewegt zu werden,
- um loses Material aufzunehmen,
- um aufgenommenes loses Material in die Verarbeitungskammer (Ch) einzuspeisen,
- um eingespeistes loses Material in der Verarbeitungskammer (Ch) mittels der Verarbeitungseinrichtung (9) zu verarbeiten,
- um verarbeitetes loses Material aus der Verarbeitungskammer (Ch) auf den oder einen Ballenträger (18) zu überführen,
- um einen Ballen (B) zu bilden, so dass der gebildete Ballen (B) zum Ablegen auf dem Untergrund (GS) bereit ist, und
- um den gebildeten Ballen (B) von dem Ballenträger (18) auf dem Untergrund (GS) abzulegen,
wobei der oder jeder Untergrundeigenschaftensensor (41, 42) eingerichtet ist, um mindestens einen Wert (InS) zu messen, der eine Eigenschaft des Untergrunds (GS), die an dem derzeitigen Ort der ballenbildenden Vorrichtung (1) auftritt, anzeigt, und
wobei der Ballenpressencomputer (50) eingerichtet ist, um abhängig von dem oder mindestens einem gemessenen Untergrundeigenschaftenwert (Ins) eine Entscheidung zu fällen, ob der derzeitige Ort zum dortigen Ablegen mindestens einen Ballens (B), der derzeit an Bord der ballenbildenden Vorrichtung (1) ist, geeignet ist oder nicht,
**dadurch gekennzeichnet, dass**
die ballenbildende Vorrichtung (1) zum Bereitstellen einer weiteren Verarbeitungskammer (Ch', Ch") eingerichtet ist, die vertikal oder unter einem Winkel über dem oder einem Ballenträger (18) angeordnet ist,
wobei die ballenbildende Vorrichtung (1) eingerichtet ist,
- um verarbeitetes loses Material aus der Verarbeitungskammer (Ch) in die weitere Verarbeitungskammer (Ch', Ch") zu bewegen,
- bewegtes loses Material in der weiteren Verarbeitungskammer (Ch', Ch") weiter zu verarbeiten,
- die Bildung des Ballens (B) in der weiteren Verarbeitungskammer (Ch', Ch") zu komplettieren und
- über Untergrund (GS) bewegt zu werden, bis sie einen Ort erreicht, der zum dortigen Ablegen mindestens eines gebildeten Ballens (B) geeignet ist,
wobei
der oder ein Untergrundeigenschaftensensor (41, 42) eingerichtet ist, um einen Wert zu messen, der die oder eine Untergrundeigenschaft, die an einem Ort auftritt, welcher sich von dem derzeitigen Ort der ballenbildenden Vorrichtung (1) unterscheidet, anzeigt, und
der Ballenpressencomputer (50) eingerichtet ist, abhängig von dem oder mindestens einem gemessenen Untergrundeigenschaftenwert (Ins) zu entscheiden, ob dieser unterschiedliche Ort zum dortigen Ablegen eines Ballens (B) geeignet ist.

16. Ballenbildende Vorrichtung nach Anspruch 15,
**dadurch gekennzeichnet, dass**
der Ballenpressencomputer (50) eingerichtet ist, um eine Trajektorie (Tr) zu berechnen, die
- den derzeitigen Ort der ballenbildenden Vorrichtung (1) und
- mindestens einen geeigneten Ort, der sich von dem derzeitigen Ort unterscheidet, aufweist, und
der Ballenpressencomputer (50) weiterhin dazu eingerichtet ist, Steuerausgaben zum Führen oder Steuern der ballenbildenden Vorrichtung (1) längs der erzeugten Trajektorie (Tr) zu dem geeigneten unterschiedlichen Ort auszugeben.

## Revendications

1. Procédé de formation d'une pluralité de balles (B) au moyen d'un dispositif de formation de balle (1),
dans lequel le dispositif de formation de balle (1) comprend
un dispositif de traitement (9) comportant un compartiment de traitement (Ch),
un support de balle (18) positionné à l'extérieur du compartiment de traitement (Ch) prévu
un ordinateur de presse à balle (50), et
au moins un capteur de propriété de sol (41, 42),
dans lequel le support de balle (18) est agencé afin de supporter au moins une balle (B),
dans lequel la formation d'une balle (B) comprend les étapes dans lesquelles le dispositif de formation de balle (1)
est déplacé sur le sol (GS),
reçoit un matériau libre,
injecte le matériau libre reçu dans le compartiment de traitement (Ch),
traite le matériau libre injecté dans le compartiment de traitement (Ch) au moyen du dispositif de traitement (9),
transfère le matériau libre traité à partir du compartiment de traitement (Ch) sur le support de balle (18),
forme la balle (B) de telle sorte que la balle formée (B) peut être déposée sur le sol (GS), et
dépose la balle formée (B) à partir du support de balle (18) sur le sol (GS),
dans lequel, pour chacune de la pluralité balle (B), il est exécuté au moins une fois les étapes supplémentaires dans lesquelles
le ou un capteur de propriété de sol (41, 42) mesure au moins une valeur (InS) représentative d'une propriété du sol (GS) présente à l'emplacement courant du dispositif de formation de balle (1), et
l'ordinateur de presse à balle (50) prend au moins une fois, de manière automatique, en fonction de la ou d'au moins une valeur de propriété de sol (InS) mesurée, une décision concernant le fait que l'emplacement courant est ou non adapté afin d'y déposer la balle (B),
**caractérisé en ce que**
le dispositif de formation de balle (1) comporte, au moins temporairement, un compartiment de traitement supplémentaire (Ch', Ch") qui est positionné verticalement ou angulairement au-dessus du support de balle (18),
dans lequel l'étape dans laquelle le matériau libre traité est transféré à partir du compartiment de traitement (Ch) sur le support de balle (18) comprend l'étape dans laquelle :
le matériau libre traité est déplacée à partir du compartiment de traitement (Ch) dans le compartiment de traitement supplémentaire (Ch', Ch"),
dans lequel l'étape dans laquelle une balle (B) de la pluralité de balle est formée comprend les étapes dans lesquelles :
le matériau libre déplacé subit un traitement supplémentaire dans le compartiment de traitement supplémentaire (Ch', Ch") et
la formation de la balle (B) est achevée dans le compartiment de traitement supplémentaire (Ch', Ch"), et
dans lequel l'étape dans laquelle une balle (B) formée est déposée sur le sol (GS)
comprend l'étape dans laquelle la balle (B) formée est déplacée hors du compartiment de traitement supplémentaire (Ch', Ch") et
est exécutée après que le dispositif de formation de balle (1) a été déplacé au sol (GS) vers un emplacement approprié afin de déposer cette balle (B)
dans lequel le dispositif de formation de balle (1) est déplacé au sol (GS) dans une zone (SBA, NSBA) et le procédé comprend les étapes supplémentaires dans lesquelles le ou un capteur de propriété de sol (41, 42) mesure au moins une valeur (InS) représentative de la ou d'au moins une propriété de sol présente à un emplacement de la zone (SBA, NSBA) qui est différent de l'emplacement courant du dispositif de formation de balle (1) et, en fonction de la valeur de propriété de sol mesurée (InS), l'ordinateur de presse à balle (50) décide du fait que cet emplacement différent est adapté afin d'y déposer une balle (B), dans lequel
l'étape d'injection de matériau libre dans le compartiment de traitement (Ch) est interrompue temporairement si
une valeur représentative de la quantité de matériau libre dans le compartiment de traitement (Ch) atteint un seuil de quantité donné ou calculé, et
une balle (B) est toujours formée ou supportée dans le compartiment de traitement supplémentaire (Ch', Ch").

2. Procédé de formation de balle selon la revendication 1,
**caractérisé en ce que**
le seuil de quantité est calculé automatiquement pendant que le dispositif de formation de balle (1) est déplacé au sol (GS),
dans lequel le seuil de quantité est calculé en fonction d'une valeur représentative de la quantité de matériau libre dans le compartiment de traitement supplémentaire (Ch', Ch").

3. Procédé de formation de balle selon la revendication 1 ou 2,
**caractérisé en ce que**
le procédé comprend les étapes supplémentaires dans lesquelles
l'interruption est arrêtée et le matériau libre est injecté dans le compartiment de traitement (Ch) après que la balle formée (B) a été déplacée hors du compartiment de traitement supplémentaire (Ch', Ch") et
le matériau libre traité est transféré à partir du compartiment de traitement (Ch) vers le compartiment de traitement supplémentaire (Ch', Ch").

4. Procédé de formation de balle selon l'une des revendications précédentes,
**caractérisé en ce que**
l'étape de réception de matériau libre est temporairement interrompue si
une valeur représentative de la quantité de matériau libre à l'intérieur du dispositif de formation de balle (1) atteint un seuil de quantité donné et
l'interruption est arrêtée et le matériau libre est de nouveau reçu après que la ou une balle (B) a été déposée sur le sol (GS).

5. Procédé de formation de balle selon l'une des revendications précédentes,
**caractérisé en ce que**
le résultat du fait que le ou au moins un emplacement différent n'est pas adapté afin d'y déposer une balle (B) déclenche l'étape dans laquelle
la formation d'une balle (B) dans le compartiment de traitement supplémentaire (Ch) est achevée, et
la balle formée (B) est déposée sur le sol (GS) dès que le dispositif de formation de balle (1) atteint un emplacement approprié.

6. Procédé de formation de balle selon la revendication 5,
**caractérisé en ce que**
le fait que l'emplacement différent n'est pas approprié déclenche l'étape supplémentaire dans laquelle le matériau libre traité
est transféré à partir du compartiment de traitement (Ch) dans le compartiment de traitement supplémentaire (Ch', Ch") et
est utilisé afin de former la balle (B).

7. Procédé de formation de balle selon l'une des revendications précédentes,
**caractérisé en ce que**
le procédé comprend les étapes supplémentaires dans lesquelles
une trajectoire (Tr) est produite pendant que le dispositif de formation de balle (1) se déplace au sol (GS),
dans lequel la trajectoire (Tr) comprend
l'emplacement courant du dispositif de formation de balle (1) et
au moins un emplacement dans la zone (SBA, NSBA) qui est différent de l'emplacement courant du dispositif de formation de balle (1) et qui est, en fonction de la valeur de propriété de sol mesurée, approprié afin d'y déposer une balle (B),
dans lequel la trajectoire (Tr) est calculée en fonction de la ou d'une valeur de propriété de sol mesurée pour le ou au moins un emplacement différent, et
dans lequel la trajectoire (Tr) est utilisée afin de déplacer davantage le dispositif de formation de balle (1) au sol (GS) à partir de l'emplacement courant vers le ou un emplacement approprié.

8. Procédé de formation de balle selon la revendication 7,
**caractérisé en ce que**
une valeur représentative de la quantité de matériau libre couramment présente dans le compartiment de traitement (Ch) et/ou
une valeur représentative de la quantité de matériau libre couramment présente dans le compartiment de traitement supplémentaire (Ch)
est mesurée et
la trajectoire (Tr) est calculée, en outre, en fonction de la ou d'au moins une valeur de quantité mesurée.

9. Procédé de formation de balle selon l'une des revendications précédentes,
**caractérisé en ce que**
l'étape dans laquelle la ou une valeur de propriété de sol (InS) existant à l'emplacement différent de l'emplacement courant est mesurée
est exécutée en appliquant un premier procédé de mesure et
le procédé comprend les étapes supplémentaires dans lesquelles :
le dispositif de formation de balle (1) est déplacé vers l'emplacement différent,
le ou un capteur de propriété de sol (41, 42) mesure la valeur (InS) de la ou d'une propriété du sol existant à l'emplacement différent qui est maintenant l'emplacement courant
en appliquant un second procédé de mesure différent du premier procédé de mesure, et
la balle (B) est déposée à cet emplacement si le premier de même que le second procédé de mesure conduisent au résultat que cet emplacement est approprié.

10. Procédé de formation de balle selon l'une des revendications précédentes,
**caractérisé en ce que**
une valeur finale requise respective pour chaque propriété d'une balle (B) de la pluralité est donnée,
dans lequel le procédé comprend l'étape supplémentaire dans laquelle :
une zone d'achèvement prévue est calculée
de telle sorte que le dispositif de formation de balle (1) atteint la zone d'achèvement prévue calculée
lorsque la valeur de propriété de balle pour la ou une balle (B) formée à l'intérieur du dispositif de formation de balle (1) atteint la valeur finale requise,
dans lequel la zone d'achèvement prévue calculée comprend le ou un emplacement différent pour lequel la ou une valeur de propriété de sol (InS) est mesurée.

11. Procédé de formation de balle selon la revendication 10,
**caractérisé en ce que**
le dispositif de formation de balle (1) dépose la ou une balle (B) sur le sol (GS) avant que la valeur de propriété de balle pour la balle (B) atteigne la valeur finale requise si aucun emplacement à l'intérieur de la zone d'achèvement n'est appropriée afin d'y déposer la balle (B).

12. Procédé de formation de balle selon l'une des revendications précédentes,
**caractérisé en ce que**
un seuil de quantité pour la quantité maximale de matériau libre qui peut être chargé à l'intérieur du dispositif de formation de balle (1) est donné,
dans lequel le procédé comprend l'étape supplémentaire dans laquelle
une zone de quantité prévue est calculée
de telle sorte que le dispositif de formation de balle (1) atteint ou est à l'intérieur de la zone de quantité prévue calculée lorsque la quantité de matériau libre à l'intérieur du dispositif de formation de balle (1) atteint le seuil de quantité donné,
dans lequel la zone de quantité prévue comprend le ou un emplacement différent pour lequel la ou une valeur de propriété de sol (InS) est mesurée.

13. Procédé de formation de balle selon l'une des revendications précédentes,
dans lequel l'étape dans laquelle le matériau libre est reçu comprend l'étape dans laquelle
le dispositif de formation de balle (1) collecte du matériau libre au sol (GS) tout en se déplaçant sur le sol (GS),
dans lequel l'étape de collecte de matériau libre est au moins temporairement aussi exécutée pendant que le matériau libre collecté, traité, et transféré est, en outre, traité dans le compartiment de traitement supplémentaire (Ch', Ch") et est **caractérisé en ce que**
l'étape de collecte de matériau libre à partir du sol (GS) est temporairement interrompue si
une valeur représentative de la quantité de matériau libre dans le compartiment de traitement (Ch) atteint un seuil donné et
la balle formée (B) est toujours contenue à l'intérieur du dispositif de formation de balle (1).

14. Procédé de formation de balle selon l'une des revendications précédentes,
**caractérisé en ce que**
le dispositif de formation de balle (1) est relié mécaniquement à un véhicule supplémentaire (70) comprenant un capteur de propriété de sol (42) supplémentaire,
dans lequel le dispositif de formation de balle (1) et le véhicule supplémentaire (70) se déplacent conjointement sur le sol (GS),
dans lequel, l'étape dans laquelle l'ordinateur de presse à balle (50) décide du fait que l'emplacement courant et/ou un autre est approprié, est exécutée
en fonction de la ou d'une valeur de propriété de sol (InS) mesurée par le capteur de propriété de sol (41) du dispositif de formation de balle (1) et, de plus,
en fonction de la ou d'une valeur de propriété de sol (Ins.1) mesurée par le capteur de propriété de sol (42) du véhicule supplémentaire (70).

15. Dispositif de formation de balle destiné à former une pluralité de balles (B)
dans lequel le dispositif de formation de balle (1) comprend
un dispositif de traitement (9) comportant un compartiment de traitement (Ch),
au moins un support de balle (18) positionné l'extérieur du compartiment de traitement (Ch) prévu,
un ordinateur de presse à balle (50), et
au moins un capteur de propriété de sol (41, 42),
dans lequel le support de balle (18) est agencé afin de supporter au moins une balle (B),
dans lequel le dispositif de formation de balle (1) est agencé de manière à :
être déplacé au sol (GS),
recevoir du matériau libre,
injecter le matériau libre reçu dans le compartiment de traitement (Ch),
traiter le matériau libre injecté dans le compartiment de traitement (Ch) au moyen du dispositif de traitement (9),
transférer du matériau libre traité à partir du compartiment de traitement (Ch) vers le ou un support de balle (18),
former une balle (B) de telle sorte que la balle (B) formée puisse être déposée sur le sol (GS), et
déposer la balle (B) formée à partir du support de balle (18) sur le sol (GS),
dans lequel le ou chaque capteur de propriété de sol (41, 42) est agencé afin de mesurer au moins une valeur (InS) représentative d'une propriété du sol (GS) présente à l'emplacement courant du dispositif de formation de balle (1), et
dans lequel l'ordinateur de presse à balle (50) est agencé de manière à, en fonction de la ou d'au moins une valeur de propriété de sol (InS) mesurée, décider si l'emplacement courant est approprié ou non afin d'y déposer au moins une balle (B) couramment présente à l'intérieur du dispositif de formation de balle (1),
**caractérisé en ce que**
le dispositif de formation de balle (1) est agencé afin de comporter un compartiment de traitement supplémentaire (Ch', Ch") qui est positionné verticalement ou angulairement au-dessus du ou d'un support de balle (18), dans lequel le dispositif de formation de balle (1) est agencé de manière à
déplacer du matériau libre transformé à partir du compartiment de traitement (Ch) dans le compartiment de traitement supplémentaire (Ch', Ch"),
appliquer un traitement supplémentaire au matériau libre déplacé dans le compartiment de traitement supplémentaire (Ch', Ch"),
achever la formation de la balle (B) dans le compartiment de traitement supplémentaire (Ch', Ch"), et
être déplacé au sol (GS) jusqu'à ce qu'il atteigne un emplacement approprié afin d'y déposer au moins une balle (B) formée
dans lequel
le ou un capteur de propriété de sol (41, 42) est agencé afin de mesurer une valeur représentative de la ou d'une propriété du sol présente à un emplacement qui est différent de l'emplacement courant du dispositif de formation de balle (1) et
l'ordinateur de presse à balle (50) est agencé de manière à décider en fonction de la ou d'au moins une valeur de propriété de sol (InS) mesurée du fait que cet emplacement différent est approprié afin d'y déposer une balle (B).

16. Dispositif de formation de balle selon la revendication 15,
**caractérisé en ce que**
l'ordinateur de presse à balle (50) est agencé de manière à calculer une trajectoire (Tr) qui comprend
l'emplacement courant du dispositif de formation de balle (1) et
au moins un emplacement approprié qui est différent de l'emplacement courant, et
l'ordinateur de presse à balle (50) est, en outre, agencé de manière à produire des sorties de commande afin de guider ou de diriger le dispositif de formation de balle (1) vers l'emplacement différent approprié le long de la trajectoire (Tr) produite.
